(19) Europäisches Patentamt
European Patent Office
Office européen des brevets

(11) **EP 4 734 513 A1**

(12) **EUROPEAN PATENT APPLICATION**
published in accordance with Art. 153(4) EPC

(43) Date of publication:
**29.04.2026 Bulletin 2026/18**

(21) Application number: **24825039.1**

(22) Date of filing: **13.05.2024**

(51) International Patent Classification (IPC):
***H04N 19/186*** *(2014.01)* ***H04N 19/182*** *(2014.01)*
***H04N 19/593*** *(2014.01)* ***H04N 9/64*** *(2023.01)*

(86) International application number:
**PCT/CN2024/092912**

(87) International publication number:
**WO 2024/260142 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.06.2023 CN 202310730087**

(71) Applicant: **Nokia Technologies Oy**
**02610 Espoo (FI)**

(72) Inventor: **LIU, Yutian**
**Shenzhen, Guangdong 518057 (CN)**

(74) Representative: **Nokia EPO representatives**
**Nokia Technologies Oy**
**Karakaari 7**
**02610 Espoo (FI)**

(54) **IMAGE PROCESSING METHOD, AND PROCESSING DEVICE AND STORAGE MEDIUM**

(57) The present disclosure provides an image processing method, an image processing device, and a storage medium. The image processing method includes: determining or generating a prediction result for a pixel to be predicted according to a first luminance value of at least one non-down-sampled luminance pixel. In the present disclosure, prediction on image chrominance information is performed according to luminance values of non-down-sampled luminance pixels that have not undergone down-sampling processing, which can reduce a distortion level of predicted chrominance values and/or improve the prediction quality of chrominance pixels in image blocks.

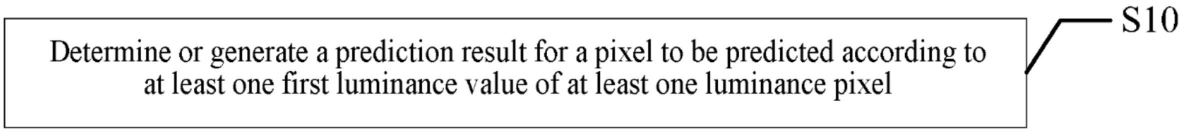


FIG. 6

EP 4 734 513 A1

## Description

### CROSS-REFERENCE TO RELATED APPLICATION(S)

This application claims priority to Chinese Patent Application No. 202310730087.7, filed with the China National Intellectual Property Administration on June 20, 2023 and entitled "IMAGE PROCESSING METHOD, IMAGE PROCESSING DEVICE, AND STORAGE MEDIUM", which is incorporated herein by reference in its entirety.

### FIELD

This application relates to the field of image processing technology, and in particular, to an image processing method, an image processing device, and a storage medium.

### BACKGROUND

In some current implementations, under the YUV (Y represents luminance/gray value, U represents chrominance, and V represents chroma) color encoding mode, before performing intra prediction on video images with an image format of4:2:0 or 4:2:2, down-sampling processing of luminance pixels within image blocks is typically required.

During the conception and implementation of this application, the inventors find at least the following problem: down-sampling the luminance pixels results in the loss of some luminance information, leading to distortion of predicted chrominance values of the chrominance pixels and/or poor prediction quality for the chrominance pixels within the image blocks.

The preceding description is intended to provide general background information and does not necessarily constitute the prior art.

### SUMMARY

In response to the above-mentioned technical problems, this application provides an image processing method, an image processing device, and a storage medium, which can reduce a distortion level of prediction results obtained through prediction and/or improve the prediction quality of pixels in image blocks.

This application provides an image processing method, applicable to a processing device (e.g., a smart terminal or a server), including:

step S10: determining or generating a prediction result for a pixel to be predicted according to at least one first luminance value of at least one luminance pixel.

Optionally, step S10 is step S100: determining or generating a prediction result for a pixel to be predicted according to at least one first luminance value of at least one non-down-sampled luminance pixel. Alternatively, step S10 is step S101: determining or generating a prediction result for a pixel to be predicted according to at least one first luminance value of at least one down-sampled luminance pixel.

Optionally, the step S100 includes at least one of :

A first method: determining or generating the prediction result according to the at least one first luminance value, at least one luminance offset, and at least one chrominance offset;

A second method: determining or generating the prediction result according to the at least one first luminance value and a gradient value of the at least one luminance pixel;

A third method: determining or generating an intermediate prediction result for the pixel to be predicted according to at least one first luminance value, and determining or generating the prediction result according to the intermediate prediction result;

A fourth method: determining or generating the prediction result according to the at least one first luminance value and positional information of the at least one non-down-sampled luminance pixel; or

A fifth method: determining or generating the prediction result according to the at least one first luminance value and a second luminance value of at least one down-sampled luminance pixel.

Optionally, the step S101 includes at least one of :

A first method: determining or generating the prediction result according to the at least one first luminance value, at least one luminance offset, and at least one chrominance offset;

A second method: determining or generating the prediction result according to the at least one first luminance value and a gradient value of the at least one down-sampled luminance pixel;

A third method: determining or generating an intermediate prediction result for the pixel to be predicted according to at least one first luminance value, and determining or generating the prediction result according to the intermediate prediction result;

A fourth method: determining or generating the prediction result according to the at least one first luminance value and positional information of the at least one down-sampled luminance pixel; or

A fifth method: determining or generating the prediction result according to the at least one first luminance value and a second luminance value of at least one other down-sampled luminance pixel.

Optionally, the intermediate prediction result includes a first intermediate prediction result and/or a second intermediate prediction result, and/or, the determining or generating the prediction result according to the intermediate prediction result includes:

performing weighted processing on the first intermediate prediction result and the second intermediate prediction result to determine or generate the prediction result.

Optionally, in the method , at least one of :

the first intermediate prediction result is determined or generated according to the at least one first luminance value;

the second intermediate prediction result is determined or generated according to a gradient value of the at least one luminance pixel; or

weights for the weighted processing are determined or generated according to distortion levels corresponding to the first intermediate prediction result and the second intermediate prediction result.

Optionally, the gradient value of the at least one luminance pixel is a gradient value of at least one non-down-sampled luminance pixel, or the gradient value of the at least one luminance pixel is a gradient value of at least one down-sampled luminance pixel.

Optionally, in the method further, at least one of:

the positional information is determined or generated according to at least one positional scaling information; or

the down-sampled luminance pixel is obtained or generated by down-sampling a luminance pixel.

Optionally, the down-sampled luminance pixel is obtained or generated by down-sampling a non-down-sampled luminance pixel. Alternatively, the down-sampled luminance pixel is a second down-sampled luminance pixel, which is obtained or generated by down-sampling a down-sampled luminance pixel and/or another down-sampled luminance pixel.

Optionally, before the step S10, the method further includes: acquiring or determining a first pixel flag according to a dimension of a luminance block where a luminance pixel is located.

If the first pixel flag is a first value, the step S10 includes: directly determining or generating the prediction result according to the luminance pixel.

Alternatively, if the first pixel flag is a second value, the step S10 includes: performing down-sampling processing on the luminance pixel to obtain a down-sampled luminance pixel and determining or generating the prediction result according to a second luminance value of the down-sampled luminance pixel.

Optionally, a prediction mode used for performing the step S10 is determined according to values of a second pixel flag and a gradient flag.

Optionally, in the method, at least one of:

the at least one non-down-sampled luminance pixel is a luminance pixel that has not undergone down-sampling processing during the image encoding or decoding process;

the pixel to be predicted is a chrominance pixel; or

the prediction result is a chrominance prediction result.

Optionally, the luminance pixel is a non-down-sampled luminance pixel, or the luminance pixel is a first down-sampled luminance pixel.

This application further provides a processing device, including a memory and a processor. The processor has an image processing program stored therein. The image processing program, when executed by the processor, causes the steps of any one of the above-mentioned image processing methods to be implemented.

This application further provides a storage medium, having a computer program stored therein. The computer program, when executed by a processor, causes the steps of any one of the above-mentioned image processing methods to be implemented.

As mentioned above, the image processing method in this application is applicable to a processing device, and includes the step S10: determining or generating a prediction result for a pixel to be predicted according to a first luminance value of at least one non-down-sampled luminance pixel. Through the above-mentioned technical solutions, this application can reduce the distortion level of the prediction result obtained through prediction and/or improve the prediction quality of the pixel to be predicted in the image block.

## BRIEF DESCRIPTION OF THE DRAWINGS

The accompanying drawings herein are incorporated into the specification to form a part of the specification, illustrate embodiments conforming to this application, and are used to explain the principle of this application together with the specification. In order to more clearly illustrate the technical solutions in the embodiments of this application, the accompanying drawings used for describing the embodiments will be briefly described below. Apparently, those of ordinary skill in the art may still derive other accompanying drawings from these accompanying drawings without creative efforts.

FIG. 1 is a schematic diagram of a hardware structure of a mobile terminal for implementing various embodiments of this application;

FIG. 2 is an architectural diagram of a communication network system according to an embodiment of this application;

FIG. 3 is a schematic diagram of an application scenario involved in a convolutional cross-component model (CCCM);

FIG. 4 is a schematic diagram of another application scenario involved in a gradient and location-based convolutional cross-component model (GL-CCCM) for intra chrominance prediction;

FIG. 5A is a schematic diagram of an image encoding scenario involved in an image processing method according to an embodiment of this application;

FIG. 5B is a schematic diagram of an image decoding scenario involved in an image processing method according to an embodiment of this application;

FIG. 6 is a schematic flowchart of an image processing method according to the first embodiment;

FIG. 7A is a schematic diagram of a down-sampled input luminance sample in a prediction model involved in an image processing method according to the second embodiment;

FIG. 7B is a schematic diagram of a non-down-sampled input luminance sample in the prediction model involved in the image processing method according to the second embodiment;

FIG. 8 is a schematic diagram of a location of a luminance sample for gradient calculation involved in the image processing method according to the second embodiment;

FIG. 9A is a schematic diagram of vertical and horizontal locations of a luminance sample and a chrominance sample in a 4:2:0 format involved in the image processing method according to the second embodiment;

FIG. 9B is a schematic diagram of vertical and horizontal locations of a luminance sample and a chrominance sample in a 4:2:2 format involved in the image processing method according to the second embodiment;

FIG. 10 is a schematic diagram of down-sampling processing using an average value within an adjacent region involved in the image processing method according to the second embodiment;

FIG. 11 is a schematic diagram of down-sampling processing using a maximum value within the adjacent region involved in the image processing method according to the second embodiment;

FIG. 12 is a schematic diagram of determining chrominance samples of a chrominance block using fusion processing involved in the image processing method according to the second embodiment;

FIG. 13 is a schematic diagram of dimensions of a luminance block and a chrominance block in an image block involved in an image processing method according to the third embodiment;

FIG. 14 is a schematic diagram of determining chrominance samples of the chrominance block using a down-sampled luminance block involved in the image processing method according to the third embodiment;

FIG. 15 is a schematic diagram of determining chrominance samples of the chrominance block using a non-down-sampled luminance block involved in the image processing method according to the third embodiment; and

FIG. 16 is a schematic diagram of an application process of determining a combination mode for cross-component intra prediction during a decoding process involved in the image processing method according to the second embodiment.

The objective implementation, functional features, and advantages of this application will be further described in conjunction with the embodiments and with reference to the accompanying drawings. Through the above-mentioned accompanying drawings, clear embodiments of this application have been presented, with more detailed descriptions to follow in the subsequent text. These accompanying drawings and textual descriptions are not intended to limit the scope of the concept of this application in any way, but rather to elucidate the concept of this application for those skilled in the art by referring to specific embodiments.

## DETAILED DESCRIPTION OF EMBODIMENTS

Exemplary embodiments are described in detail herein, with examples shown in the accompanying drawings. In a case where the following description involves the accompanying drawings, unless otherwise indicated, the same numerals in different accompanying drawings represent the same or similar elements. Implementations described in the following exemplary embodiments do not represent all implementations consistent with this application. On the contrary, they are merely examples of apparatuses and methods consistent with some aspects of this application, as described in detail in the appended claims.

It should be noted that herein, the terms "comprise", "include", or any other variations thereof are intended to encompass non-exclusive inclusion, such that a process, a method, an article, or an apparatus that includes a series of elements not only includes those elements but also includes other elements not explicitly listed or elements inherent to the process, the method, the article, or the apparatus. Without further limitations, an element defined by the phrase "including a..." does not exclude the existence of additional identical elements in the process, the method, the article, or the apparatus containing that element. Further, components, features, and elements with the same name in different embodiments of this application may have the same or different meanings, and the specific meanings need to be determined based on interpretation within the specific embodiment or further in conjunction with the context of the specific embodiment.

It should be understood that although the terms such as first, second, and third may be used herein to describe various types of information, such information is not to be limited to these terms. These terms are merely used to distinguish the same type of information from one another. For example, without departing from the scope of the specification, first information may also be referred to as second information, and similarly, second information may also be referred to as first information. Depending on the context, the term "if" as used herein may be interpreted as "when" or "upon" or "in response to determining". Moreover, as used in this specification, the singular forms "one," "a/an," and "the" are intended to also include the plural form unless the context indicates otherwise. It should be further understood that the terms "comprise" and "include" indicate the presence of the features, steps, operations, components, modules, items, types, and/or groups, without excluding the presence, occurrence, or addition of one or more other features, steps, operations, components, modules, items, types, and/or groups. The terms "or", "and/or", "including at least one of the following", etc., as used in this application, may be interpreted as inclusive or meaning any one or any combination. For example, "including at least one of the following: A, B, and C" means "any of the following: A; B; C; A and B; A and C; B and C; and A, B, and C". For another example, "A, B, or C" or "A, B, and/or C" means "any of the following: A; B; C; A and B; A and C; B and C; and A, B, and C". The defined exception occurs only when the combination of components, functions, steps, or operations inherently and mutually exclude each other in certain ways.

It should be understood that, although each step of the flowchart in the embodiments of this application is displayed sequentially according to arrows, these steps are not necessarily performed according to an order indicated by the arrows. Unless explicitly stated in this specification, there are no strict order limitations on the execution of these steps, and these steps may be performed in another order. And/or, at least a portion of the steps in the figures may include a plurality of sub-steps or a plurality of stages, which are not necessarily completed at the same moment but may be performed at different moments, are not necessarily carried out in sequence but may be carried out alternately or interchangeably with other steps or at least a portion of sub-steps or stages of the other steps.

According to the context, for example, the terms "if" and "in case of " used herein may be explained as "during" or "when" or "in response to determining" or "in response to detecting". Similarly, according to the context, phrases " if determining" or "if detecting (described conditions or events)" may be explained as "when determining" or "in response to determining" or "when detecting (described conditions or events)" or "in response to detecting (described conditions or events)".

It should be noted that in this specification, step designations such as step S10 are used to express corresponding content more clearly and concisely, and do not constitute substantive restrictions on the order. During specific implementation, those skilled in the art may perform other steps before performing step S10, etc., but these shall all fall within the protection scope of this application.

It should be understood that specific embodiments described herein are merely used to explain this application and are not intended to limit this application.

In subsequent descriptions, suffixes such as "module" "component", or "unit" used to denote elements are solely for the purpose of facilitating the explanation of this application and do not have specific meanings in themselves. Therefore, the "module", "component", or "unit" may be used interchangeably.

A processing device may be implemented in various forms. For example, the processing device described in this application may be a server, or may include intelligent terminals such as a mobile phone, a tablet, a laptop, a palmtop computer, a personal digital assistant (PDA), a portable media player (PMP), a navigation apparatus, a wearable device, a smart bracelet, and a pedometer, as well as fixed terminals such as a digital TV and a desktop computer.

In the subsequent descriptions, a mobile terminal is used as an example for illustration. Those skilled in the art should understand that, apart from components specifically designed for mobile purposes, the configurations according to the implementations of this application can also be applied to fixed-type terminals.

Referring to FIG. 1, which is a schematic diagram of a hardware structure of a mobile terminal implementing various embodiments of this application, the mobile terminal 100 may include components such as a radio frequency (RF) unit 101, a WiFi module 102, an audio output unit 103, an A/V (audio/video) input unit 104, a sensor 105, a display unit 106, a user input unit 107, an interface unit 108, a memory 109, a processor 110, and a power supply 111. Those skilled in the art should understand that the structure of the mobile terminal shown in FIG. 1 does not constitute a limitation on the mobile terminal. The mobile terminal may include more or fewer components than those illustrated, or certain components may be combined, or different component arrangements may be employed.

Below, each component of the mobile terminal is introduced in detail in conjunction with FIG. 1:

The radio frequency unit 101 can be used for receiving and sending signals during information receiving and sending or call processes, which specifically receives downlink information from a base station and provides the downlink information to the processor 110 for processing, and additionally, sends uplink data to the base station. Generally, the radio frequency unit 101 includes, but is not limited to, an antenna, at least one amplifier, a transceiver, a coupler, a low noise amplifier, a duplexer, etc. Optionally, the radio frequency unit 101 may further communicate with a network and another device through a wireless communication. The above-mentioned wireless communication may use any communication standard or protocol, including but not limited to a global system of mobile communication (GSM), a general packet radio service (GPRS), code division multiple access 2000 (CDMA2000), wideband code division multiple access (WCDMA), time division-synchronous code division multiple access (TD-SCDMA), frequency division duplexing-long term evolution (FDD-LTE), time division duplexing-long term evolution (TDD-LTE), 5G, 6G, etc.

WiFi belongs to a short-range wireless transmission technology, and the mobile terminal, through the WiFi module 102, may assist a user in receiving and sending emails, browsing web pages, accessing streaming media, etc., providing the user with wireless broadband Internet access. Although FIG. 1 shows the WiFi module 102, it should be understood that the WiFi module 102 does not constitute an essential component of the mobile terminal and may be omitted entirely as needed within the scope that does not alter the essence of the present disclosure.

The audio output unit 103 may convert audio data received by the radio frequency unit 101 or the WiFi module 102, or stored in the memory 109, into audio signals and output the audio signals as sound when the mobile terminal 100 is in modes such as a call signal reception mode, a call mode, a recording mode, a speech recognition mode, and a broadcast reception mode. And/or, the audio output unit 103 may also provide audio output related to specific functions performed by the mobile terminal 100 (e.g., call signal reception sound and message reception sound). The audio output unit 103 may include a loudspeaker, a buzzer, etc.

The A/V input unit 104 is configured to receive an audio or video signal. The A/V input unit 104 may include a graphics processing unit (GPU) 1041 and a microphone 1042. The graphics processing unit 1041 processes image data of still images or videos obtained by an image capture apparatus (e.g., a camera) in a video capture mode or image capture mode. A processed image frame may be displayed on the display unit 106. The image frame processed by the graphics processing unit 1041 may be stored in the memory 109 (or another storage medium) or sent by the radio frequency unit 101 or the WiFi module 102. The microphone 1042 may receive sound (audio data) via the microphone 1042 in operating modes such as a telephone call mode, a recording mode, and a speech recognition mode, and/or can process such sound into the audio data. The processed audio (speech) data may be converted, in the telephone call mode, into a format that may be sent to a mobile communication base station via the radio frequency unit 101 for output. The microphone 1042 may implement various types of noise cancellation (or suppression) algorithms to eliminate (or suppress) noise or interference generated in an audio signal receiving and sending process.

The mobile terminal 100 further includes at least one sensor 105, such as an optical sensor, a motion sensor, and other sensors. Optionally, the optical sensor includes an ambient light sensor and a proximity sensor. Optionally, the ambient light sensor may adjust luminance of a display panel 1061 according to luminance of ambient light, and the proximity sensor may switch off the display panel 1061 and/or backlight when the mobile terminal 100 is moved to the ear. As a type of motion sensor, an accelerometer sensor may detect the magnitude of acceleration in various directions (typically three axes), when stationary, can detect the magnitude and direction of gravity, and may be used for applications that recognize a posture of a mobile phone (e.g., screen landscape and portrait switching, related games, and magnetometer posture calibration), vibration recognition-related functions (e.g., a pedometer and a tap), etc. As for other sensors that may also be configured on the mobile phone, such as a fingerprint sensor, a pressure sensor, an iris sensor, a molecular sensor, a gyroscope, a barometer, a hygrometer, a thermometer, and an infrared sensor, details are not repeated herein.

The display unit 106 is configured to display information input by the user or information provided for the user. The display unit 106 may include the display panel 1061. The display panel 1061 may be configured in the form of a liquid crystal display ( LCD), an organic light-emitting diode (OLED), or the like.

The user input unit 107 may be configured to receive input digit or character information, and generate key signal input related to the user setting and function control of the mobile terminal. Optionally, the user input unit 107 may include a touch panel 1071 and other input device 1072. The touch panel 1071, also called a touchscreen, may collect touch operations by the user on or near the touch panel 1071(e.g., an operation of the user on or near the touch panel 1071 by using a finger or stylus or any suitable object or attachment), and drive corresponding connecting apparatuses according to preset programs. The touch panel 1071 may include two parts: a touch detection apparatus and a touch controller. Optionally, the touch detection apparatus detects a user touch position, detects a signal brought by the touch operation, and transmits the signal to the touch controller. The touch controller receives touch information from the touch detection apparatus, converts the touch information into contact coordinates, then transmits the contact coordinates to the processor 110, and receives and executes a command transmitted by the processor 110. In addition, the touch panel 1071 may be implemented by using various types, such as a resistive type, a capacitance type, an infrared type, and a surface acoustic wave type. Besides the touch panel 1071, the user input unit 107 may further include the other input device 1072. Optionally, the other input device 1072 may include, but is not limited to, one or more of a physical keyboard, a function key (e.g., a volume control button and a power button), a trackball, a mouse, and a joystick, which is not specifically limited herein.

Optionally, the touch panel 1071 may cover the display panel 1061. After detecting a touch operation on or near the touch panel 1071, the touch panel 1071 transmits the touch operation to the processor 110 to determine a type of a touch event. Then, the processor 110 provides a corresponding visual output on the display panel 1061 according to the type of the touch event. Although in FIG. 1, the touch panel 1071 and the display panel 1061 are used as two separate parts to implement input and output functions of the mobile terminal, in some embodiments, the touch panel 1071 and the display panel 1061 may be integrated to implement the input and output functions of the mobile terminal, and specific details are not limited herein.

The interface unit 108 serves as an interface through which at least one external apparatus may connect to the mobile terminal 100. For example, the external apparatus may include a wired or wireless headset port, an external power supply (or battery charger) port, a wired or wireless data port, a storage card port, a port configured to connect an apparatus having an identification module, an audio input/output (I/O) port, a video I/O port, an earphone port, and the like. The interface unit 108 may be configured to receive an input (e.g., data information and electric power) from the external apparatus and transmit the received input to one or more elements in the mobile terminal 100 or may be configured to transmit data between the mobile terminal 100 and the external apparatus.

The memory 109 may be configured to store software programs and various types of data. The memory 109 may mainly include a program storage area and a data storage area. Optionally, the program storage area may store an operating system, applications required for at least one function (e.g., a sound playback function and an image playback function), etc.; and the data storage area may store data created according to the usage of the mobile phone (e.g., audio data and a phonebook), etc. In addition, the memory 109 may include a highspeed random access memory, and may further include a non-volatile memory, such as at least one magnetic disk storage device, a flash memory device, or other volatile solid-state storage devices.

The processor 110 is a control center of the mobile terminal, and is connected with various parts of the whole mobile terminal by using various interfaces and lines. By running or executing the software program and/or module stored in the memory 109, and invoking the data stored in the memory 109, the processor 110 performs various functions and data processing of the mobile terminal, thereby performing overall monitoring on the mobile terminal The processor 110 may include one or more processing units. Preferably, the processor 110 may integrate an application processor and a modem processor. Optionally, the application processor mainly processes the operating system, a user interface, applications, etc., while the modem processor mainly processes wireless communication. It should be understood that the above-mentioned modem processor may not be integrated into the processor 110.

The mobile terminal 100 may further include a power supply 111 (e.g., a battery) for supplying power to the components. The power supply 111 may be logically connected to the processor 110 through a power management system, thereby implementing functions such as charging, discharging, and power consumption management by using the power management system.

Although not shown in FIG. 1, the mobile terminal 100 may also include a Bluetooth module, etc., and details are not repeated herein.

To facilitate understanding of the embodiments of this application, a communication network system on which the mobile terminal of this application is based is described below.

Please refer to FIG. 2, FIG. 2 is an architectural diagram of a communication network system according to an embodiment of this application. The communication network system is an LTE system for a universal mobile communication technology. The LTE system includes user equipment (UE) 201, an evolved UMTS terrestrial radio access network (E-UTRAN) 202, an evolved packet core (EPC) 203, and an operator IP service 204, which are sequentially in communication connection.

Optionally, the UE 201 may be the above-mentioned terminal 100, and details are not repeated herein.

The E-UTRAN 202 includes eNodeB 2021, other eNodeB 2022, etc. Optionally, the eNodeB 2021 may be connected to the other eNodeB 2022 through a backhaul (e.g., an X2 interface), and the eNodeB 2021 is connected to the EPC 203. The eNodeB 2021 may provide access for the UE 201 to the EPC 203.

The EPC 203 may include a mobility management entity (MME) 2031, a home subscriber server (HSS) 2032, another MME 2033, a serving gateway (SGW) 2034, a PDN gateway (PGW) 2035, a policy and charging rules function (PCRF) 2036, etc. Optionally, the MME 2031 is a control node that processes signaling between the UE 201 and the EPC 203, providing bearer and connection management. The HSS 2032 is used to provide some registers to manage functions such as a home location register (not shown in the figure) and/or store some user-specific information related to service features, data rates, etc. All user data may be sent through the SGW 2034. The PGW 2035 may provide IP address allocation for the UE 201 and other functions. The PCRF 2036 is a policy and charging control decision point for service data flows and IP bearer resources, which selects and provides available policy and charging control decisions for a policy and charging enforcement function unit (not shown in the figure).

The IP service 204 may include the Internet, an intranet, an IP multimedia subsystem (IMS), other IP services, etc.

Although the LTE system is used as an example for introduction above, those skilled in the art should be aware that this application is not only applicable to the LTE system but also to other wireless communication systems, such as GSM, CDMA2000, WCDMA, TD-SCDMA, 5G, and future new network systems (e.g., 6G), and limitations are not provided herein.

This application provides an image processing method that may determine or generate a prediction result for a pixel to be predicted according to a first luminance value of at least one non-down-sampled luminance pixel. In this way, predicting image chrominance information according to luminance values of the non-down-sampled luminance pixels that have not undergone down-sampling processing may reduce a distortion level of predicted chrominance values and/or improve the prediction quality of chrominance pixels in image blocks.

For ease of understanding, professional terms that may be involved in the embodiments of this application are first explained below.

### (I) Inter-frame Prediction

During a process of encoding or decoding an image, predicting the image blocks is an essential step. For example, an encoder obtains a predicted block by predicting the image block, constructs a residual block with lower energy, and reduces transmission bits, and a decoder decodes the image by entropy-decoding the residual block and/or combining the residual block with the predicted block obtained through prediction in the decoder to obtain a decoded image block. The prediction of the image block by the encoder or the decoder may be implemented through some preset prediction modes, and the prediction modes include inter prediction modes and intra prediction modes.

### (II) Convolutional Cross-Component Model (CCCM)

The convolutional cross-component model (CCCM) uses a filter to predict the chrominance of a current image block from reconstructed luminance samples. In an embodiment, the filter used by the CCCM is composed of a 5-tap plus-shaped spatial component, a nonlinear term, and a bias term. Optionally, an input of the 5-tap plus-shaped spatial component of the filter includes a center (C) luminance sample, as well as an upper sample (also known as a northern sample, N), a lower sample (also known as a southern sample, S), a left sample (also known as a western sample, W), and a right sample (also known as an eastern sample, E) of the center (C) luminance sample, as specifically shown in FIG. 3.

The nonlinear term P represents the square of the center (C) luminance sample and is scaled to a sample value range of the content: P = (C*C + midVal) >> bit depth. Optionally, for a 10-bit content, P = (C*C + 512) >> 10.

The bias term B represents a scalar offset between an input and an output. Optionally, the bias term B is set to an intermediate chrominance value (512 for the 10-bit content).

The output of the filter is calculated as a convolution between a filter coefficient ci and an input value and is clipped to a range of valid chrominance samples:

$$predChromaVal=c0*C+c1*N+c2*S+c3*E+c4*W+c5*P+c6*B$$

(III) Intra-frame Chrominance Prediction Using Gradient and Location-based Convolutional Cross-Component Model (GL-CCCM)

The gradient and location-based convolutional cross-component model (GL-CCCM) utilizes gradient and location information to replace four spatially adjacent samples in the CCCM filter. Optionally, the GL-CCCM filter used for prediction is:

$$predChrmaVal=c0C+c1Gy+c2Gx+c3Y+c4X+c5P+c6B$$

wherein Gy and Gx represent a vertical gradient and a horizontal gradient, respectively. Combined with a spatial sample used for GL-CCCM as shown in FIG. 4, the respective calculation formulas for Gy and Gx are:

$$Gy=(2N+NW+NE)-(2S+SW+SE);$$

and

$$Gx=(2W+NW+SW)-(2E+NE+SE).$$

Optionally, Y and X parameters are vertical and horizontal positions of the center (C) luminance sample.

Optionally, the Y and X parameters may be calculated relative to top-left corner coordinates of the image block.

Optionally, referring to FIG. 5A and FIG. 5B, FIG. 5A is a schematic diagram of an image encoding scenario involved in the image processing method, while FIG. 5B is a schematic diagram of an image decoding process involved in the image processing method. As shown in FIG. 5A, the encoder at an encoding end typically divides an input video image into at least one image block on a frame-by-frame basis for processing. Each image block may be subtracted from a predicted block predicted through a prediction mode to obtain a residual block. A series of processes are then performed on the residual block and relevant parameters of the prediction mode to generate an encoded bitstream. Subsequently, at a decoding end, as shown in FIG. 5B, the decoder receives the bitstream and may obtain prediction mode parameters by parsing the bitstream. Then, an inverse transform unit and an inverse quantization unit of the decoder perform inverse transform and inverse quantization processing on a transform coefficient to obtain the residual block. Optionally, a decoding unit of the decoder parses and decodes the encoded bitstream to obtain prediction parameters and relevant side information. Next, a prediction processing unit of the decoder utilizes the prediction parameters to perform prediction processing, thereby determining a predicted block corresponding to the residual block. In this way, the decoder may obtain a reconstructed block by adding the obtained residual block and the corresponding predicted block. Optionally, a loop filtering unit of the decoder performs loop filtering processing on the reconstructed block to reduce distortion and improve video quality. Therefore, the reconstructed block has undergone the loop filtering processing is further combined into a decoded image, which is stored in a decoded image buffer or output as a decoded video signal.

Optionally, the image processing method provided in this embodiment of this application may be applied to the above-mentioned scenario involving chrominance and/or luminance prediction of the image block during the video image encoding process (e.g., a scenario involving intra prediction during video image encoding). Optionally, the image processing method provided in this embodiment of this application may also be used for a scenario involving chrominance and/or luminance prediction of image blocks to be decoded during the video decoding process, such as scenarios involving intra prediction during the video image decoding.

## First Embodiment

In this embodiment, an executing entity of the image processing method may be the above-mentioned processing device or a cluster composed of a plurality of the above-mentioned processing devices. The processing device may be a smart terminal (e.g., the above-mentioned mobile terminal 100) or a server. Herein, the processing device is taken as the executing entity in the first embodiment of the image processing method to explain the image processing method.

As shown in FIG. 6, in this embodiment, the image processing method includes the step:
step S10: Determine or generate a prediction result for a pixel to be predicted according to at least one first luminance value of at least one luminance pixel.

Optionally, step S10 is step S100: Determine or generate a prediction result for a pixel to be predicted according to at least one first luminance value of at least one non-down-sampled luminance pixel. Alternatively, step S10 is step S101: Determine or generate a prediction result for a pixel to be predicted according to at least one first luminance value of at least one down-sampled luminance pixel.

Optionally, in this embodiment, during the encoding or decoding process of an image, the processing device employs an intra prediction mode to perform chrominance prediction on an image block to be processed in the image. When using the intra prediction mode for chrominance prediction on the current image block to be processed, the processing device predicts chrominance information of a pixel to be predicted in the image block using at least one first luminance value of at least one non-down-sampled luminance pixel in the image block that has not undergone down-sampling processing, thereby determining or generating a prediction result for the pixel to be predicted.

Optionally, in this embodiment, when using the intra prediction mode for chrominance prediction on the current image block to be processed, the processing device may also predict chrominance information of the pixel to be predicted in the image block using at least one first luminance value of at least one down-sampled luminance pixel in the image block that has undergone down-sampling processing, thereby determining or generating a prediction result for the pixel to be predicted.

Optionally, in this embodiment and other embodiments elaborated later, at least one non-down-sampled luminance pixel refers to a luminance pixel that has not undergone down-sampling processing during the image encoding or decoding process; and the pixel to be predicted is a chrominance pixel of an image block, and the prediction result is a chrominance prediction result for the chrominance pixel. It should be noted that at least one non-down-sampled luminance pixel may have undergone down-sampling processing in other image processing processes apart from the image encoding or decoding process.

Optionally, in this embodiment, the image block may be an image block in the input video image (i.e., a video frame) that is currently encoded or decoded and thus requires chrominance prediction. Optionally, the image block may also be simply referred to as a current block, a current unit, or a block to be processed. The pixel to be predicted may also be referred to as a sample to be predicted. Under an H.265/high efficiency video coding (HEVC) standard, the pixel to be predicted may be a pixel or sample in a coding tree unit (CTU) or a code unit (CU) in the input video image. The embodiments of this application do not impose specific restrictions on a type of the image block referred to.

Optionally, in this embodiment, after receiving the video image from a video source, the processing device, acting as the encoder, divides the video image into at least one image block. When employing the intra prediction mode (especially a cross-component intra prediction mode) for chrominance prediction on the current image block, the processing device determines that the image block is the current image block to be processed. Subsequently, the processing device treats a chrominance pixel in the image block that has chrominance information to be predicted as the pixel to be predicted. Then, the processing device directly uses at least one first luminance value of at least one non-down-sampled luminance pixel in the image block that has not undergone down-sampling processing to predict the chrominance information of the pixel to be predicted, thereby obtaining the chrominance prediction result for the pixel to be predicted.

Optionally, the processing device, acting as the encoder, may use a method such as rate-distortion optimization to determine a final intra prediction mode adopted for the current image block. Optionally, the processing device may calculate a rate-distortion cost corresponding to each prediction mode and determine a minimum rate-distortion cost from the rate-distortion costs corresponding to the plurality of prediction modes. The prediction mode corresponding to the minimum rate-distortion cost is the final prediction mode adopted for the current image block. That is, assuming that for prediction processing of an image block currently undergoing chrominance prediction, the available prediction modes are chrominance intra prediction modes 0-N (including the cross-component intra prediction mode), when the processing device calculates that the prediction mode corresponding to the minimum rate-distortion cost for chrominance prediction is a mode i, the processing device determines the mode i as the final intra prediction mode to be used for chrominance prediction of the current image block to be processed. Optionally, i = 0, ..., and N.

Optionally, after the processing device determines or derives the chrominance information of the pixel to be predicted in the image block on a pixel-by-pixel basis according to the above-mentioned process, the processing device, acting as the encoder, may further subtract a predicted value of the corresponding pixel in the image block (i.e., image block chrominance information of the image block) from a sample value of the pixel in the current image block to obtain a residual value of the pixel and the residual block corresponding to the image block. Then, the residual block has undergone transformation and quantization processing and is then encoded by an entropy encoder to form an encoded bitstream. Optionally, the encoded bitstream may also include prediction parameters (which are packed into the encoded bitstream after entropy encoding) corresponding to the intra prediction mode determined by the processing device through the above-mentioned process, as well as relevant side information. Optionally, if the processing device employs the cross-component intra prediction mode, the above-mentioned prediction parameters at least include indication information regarding the use of the cross-component intra prediction model for prediction operations.

Optionally, the transformed and quantized residual block is added to the corresponding predicted block obtained using the prediction mode to obtain a reconstructed block. After obtaining the reconstructed block, the processing device may also perform loop filtering processing on the reconstructed block to reduce distortion.

Optionally, when acting as the decoder, the processing device can receive the encoded bitstream transmitted by the above-mentioned processing device acting as the encoder. After the processing device, acting as the decoder, receives the bitstream that is encoded by the encoder, the decoding unit of the decoder parses and decodes the bitstream to obtain the prediction parameters. Optionally, the inverse transform unit and the inverse quantization unit of the decoder perform inverse transform and inverse quantization processing on the transform coefficient to obtain the residual block. Next, the prediction processing unit of the decoder may treat the residual block as the block to be processed that needs to be decoded currently, and use the prediction parameters for prediction processing to determine the predicted block corresponding to the residual block.

Optionally, when the decoder employs the same intra prediction mode as used by the encoder, the prediction parameters obtained by parsing the bitstream may be used to acquire or determine the prediction mode to be used for chrominance prediction of the current image block to be processed (e.g., when the prediction parameters indicate that the corresponding prediction mode is the cross-component intra prediction mode, the decoder uses the cross-component intra prediction mode as the intra prediction mode for chrominance prediction of the residual block obtained after decoding). Therefore, the decoder directly uses the intra prediction mode to predict the chrominance information of the pixel to be predicted in the image block using at least one first luminance value of at least one non-down-sampled luminance pixel in the image block that has not undergone down-sampling processing.

Optionally, after the processing device, acting as the decoder, determines or derives the chrominance prediction result for at least one pixel to be predicted in the image block on a sample-by-sample basis, to determine or derive the chrominance information of the image block, the processing device may further add the parsed residual block and the predicted value of the corresponding pixel in the image block (the image block chrominance information of the image block) to obtain a reconstructed block. Finally, the processing device also performs loop filtering processing on the reconstructed block through the loop filtering unit to reduce distortion and improve video quality. The reconstructed block that has undergone the loop filtering processing is further combined into a decoded image, which is stored in the decoded image buffer or output as a decoded video signal.

Optionally, in this embodiment, the prediction mode used by the processing device acting as the encoder or the decoder for predicting the current image block (e.g., a chrominance block) may be a convolutional cross-component intra prediction model (CCCM) as shown in Formula (1):

$$predChromaVal=c0*C + c1*N + c2*S + c3*E + c4*W + c5*P + c6*B \qquad \text{Formula (1)}$$

Optionally, taking chrominance prediction as an example, predChromaVal is a chrominance predicted value of a pixel to be predicted (in this case, a chrominance pixel to be predicted) in the image block to be processed, c0 to c6 are weight coefficients, C is a luminance value of a co-located luminance pixel of the chrominance pixel to be predicted, N is a luminance value of a luminance pixel adjacent to the co-located luminance pixel form above/north, S is a luminance value of a luminance pixel adjacent to the co-located luminance pixel from below/south, E is a luminance value of a luminance pixel adjacent to the co-located luminance pixel from right/east, W is a luminance value of a luminance pixel adjacent to the co-located luminance pixel from left/west, and P is a nonlinear term. B is a bias term representing a scalar offset between an input and an output (for video with a 10-bit depth, B is set to a chrominance median, i.e., 512). P = (C*C + midVal) >> bitDepth (midVal is the chrominance median of the chrominance pixel, and bitDepth is a bit depth of video content). Positional relationships between N, S, E, W, and C are shown in FIG. 3.

In an implementation, there may be a plurality of methods for determining weight coefficients. Optionally, the above-mentioned plurality of weight coefficients may be determined according to pixels in an adjacent region of the block to be predicted where the pixel to be predicted is located. Optionally, the above-mentioned plurality of weight coefficients may be determined according to pixels in a luminance predicted block and a chrominance predicted blocks of the block to be predicted, which are determined through inter prediction.

Optionally, to perform chrominance intra prediction processing using the CCCM shown in Formula (1), the processing device needs to determine the weight coefficients c0 to c6 and the luminance values of C, N, S, E, W, P, and B in Formula (1), and then can obtain, based on Formula (1), the chrominance prediction result for the chrominance sample to be predicted, predChromaVal. Optionally, a method for the processing device to determine the weight coefficients in Formula (1) may involve acquiring or determining at least one reference region from an image frame where the image block currently requiring chrominance prediction is located and determining the weight coefficients according to sample values of luminance/chrominance pixels in the at least one reference region. In an embodiment, during chrominance prediction, at least one luminance reference region is acquired or determined. In another embodiment, during chrominance prediction, at least one chrominance reference region is acquired or determined.

In this embodiment, according to the technical solution of this application, when the processing device performs cross-component intra prediction on the chrominance information of the image block, at least one first luminance value of at least one non-down-sampled luminance pixel in the image block that has not undergone down-sampling processing is used to predict the chrominance information of the pixel to be predicted in the image block. That is, according to the technical solution of this application, down-sampling operations are not performed on a luminance image block but the luminance image block is directly used to determine a chrominance value of a chrominance image block, thereby retaining luminance information lost during the down-sampling process, reducing the distortion level of the prediction result obtained through prediction to improve the accuracy of chrominance prediction, and/or enhancing the quality of chrominance prediction for the pixel to be predicted in the image block.

Optionally, the technical solution of this application is more suitable for encoding and decoding operations on images or videos with clear details through the method for directly using the luminance image block to determine the chrominance value of the chrominance image block without performing the down-sampling operation on the luminance image block.

**Second Embodiment**

Based on any one of the above-mentioned embodiments, during the encoding or decoding process for the image, the processing device treats the chrominance pixel in the current image block to be processed that requires chrominance information prediction as the pixel to be predicted, and then, may predict the chrominance information of the pixel to be predicted according to at least one first luminance value of at least one non-down-sampled luminance pixel in the current image block to be processed that has not undergone down-sampling processing, at least one luminance offset of the image block, at least one chrominance offset of the image block, a gradient value of the at least one non-down-sampled luminance pixel, positional information of the at least one non-down-sampled luminance pixel, and/or at least one second luminance value of at least one down-sampled luminance pixel that has undergone down-sampling processing, thereby determining or generating a chrominance prediction result for the pixel to be predicted.

Optionally, the step S100 may include at least one of:

A first method: Determine or generate a prediction result according to at least one first luminance value, at least one luminance offset, and at least one chrominance offset.

Optionally, in this embodiment, during the encoding or decoding process for the image, the processing device treats the chrominance pixel in the current image block to be processed that requires chrominance information prediction as the pixel to be predicted, and then, predicts the chrominance information of the pixel to be predicted according to the at least one first luminance value of the at least one non-down-sampled luminance pixel in the current image block to be processed that has not undergone down-sampling processing, the at least one luminance offset of the image block, and the at least one chrominance offset of the image block, thereby determining or generating the chrominance prediction result for the pixel to be predicted. For example, the at least one luminance offset and the at least one chrominance offset may be a preset luminance offset value Lumaoffset and a preset chrominance offset value Chromaoffset mentioned below.

Optionally, when performing chrominance prediction on the image block to be processed in the image based on cross-component intra prediction, the processing device may adopt a prediction model PreChorma = f(Lumal, Luma2, Luma3,..., and LumaN) to calculate chrominance values of chrominance pixels in the image block requiring chrominance information prediction. PreChorma represents the chrominance pixel to be predicted, and Luma1 to LumaN are input luminance pixels as well as non-down-sampled luminance pixels that have not undergone down-sampling processing. Luma1 is a co-located luminance pixel of the chrominance pixel to be predicted, and Luma2, Luma3,..., and LumaN are luminance pixels around the co-located luminance pixel.

Optionally, if the processing device employs down-sampled luminance pixels to perform cross-component intra prediction on the chrominance information of the chrominance pixel to be predicted, Luma1 is the down-sampled co-located luminance pixel of the chrominance pixel to be predicted, while Luma2, Luma3,..., and LumaN are the down-sampled luminance pixels around the down-sampled co-located luminance pixel. If the processing device directly uses the non-down-sampled luminance pixels that have not undergone down-sampling to perform cross-component intra prediction on the chrominance information of the chrominance pixel to be predicted, Luma1 is also the non-down-sampled co-located luminance pixel of the chrominance pixel to be predicted that has not undergone down-sampling processing, and Luma2, Luma3,..., and LumaN are the non-down-sampled luminance pixels that have not undergone down-sampling processing around the non-down-sampled co-located luminance pixel that has not undergone down-sampling processing.

Optionally, as shown in FIG. 7A, during the down-sampled cross-component intra prediction process, the processing device first down-samples a luminance block A to obtain a luminance block A', and then uses down-sampled luminance pixels in the luminance block A' as input luminance pixels in the prediction model. Optionally, during the down-sampled cross-component intra prediction process, the input luminance pixels include Luma1, Luma2, Luma3,..., and Luma9, and Chroma1 is a chrominance pixel to be predicted. Luma1 is the co-located luminance pixel of the chrominance pixel to be predicted in the luminance block A' (which is down-sampled), and Luma2, Luma3,..., and Luma9 are the luminance pixels around the co-located luminance pixel in the luminance block A' (which are also down-sampled).

Optionally, as shown in FIG. 7B, when the image format of the image currently being encoded and decoded by the processing device is 4:2:0, during the non-down-sampled cross-component intra prediction process, the processing device does not down-sample the luminance block A but directly uses the luminance pixels in the luminance block A as the input luminance pixels in the prediction model. Optionally, during the process of non-down-sampled cross-component intra prediction by the processing device, the input luminance pixels include L1, L2, L3,..., and L9, and C1 is a chrominance pixel to be predicted. L1 is the co-located luminance pixel (which is not down-sampled) of the chrominance pixel to be predicted , and L2, L3,..., and L9 are the luminance pixels around the co-located luminance pixel (which are not down-sampled).

Optionally, the above-mentioned prediction model PreChorma = f(Luma1, Luma2, Luma3,..., LumaN) may also include the nonlinear term P. Optionally, the nonlinear term P may be represented as the square of a luminance pixel C corresponding to the chrominance pixel to be predicted, scaled to a bit depth range, i.e., P = (Lumal * Luma1 + midVal) >> bitDepth, where bitDepth is the bit depth corresponding to the sample, and ">>" is a right shift symbol. Optionally, for 10-bit video content, P = (Luma1 * Luma1 + 512) >> 10.

Optionally, the above-mentioned prediction model PreChorma = f(Luma1, Luma2, Luma3,..., LumaN) may also include the bias term B. Optionally, the bias term B may represent a scalar offset between the input and the output. Optionally, in video coding standards, for the 10-bit video content, the bias term B is set to a chrominance value of 512.

Optionally, the above-mentioned prediction model PreChorma = f(Luma1, Luma2, Luma3,..., LumaN), when combined with the nonlinear term P and the bias term B, may be transformed into: predChromaVal=c0*Lumal+c1*Luma2+c2*Luma3+c3*Luma4+c4*Luma5+c5*P+c6*B. Luma2, Luma3, and Luma4 are luminance pixels to the left of, right of, above, or below the co-located luminance pixel Luma1, respectively, while c0 to c6 are weights.

Optionally, if the processing device sets a luminance offset value and a chrominance offset value in the above-mentioned prediction model PreChorma = f(Luma1, Luma2, Luma3,..., LumaN), the prediction model may be transformed into: PreChorma' = f(Luma1', Luma2', Luma3',..., LumaN'), where Luma1'=Luma1-Lumaoffset; Luma2'=Luma2-Lumaoffset; and LumaN'=LumaN-Lumaoffset. Lumaoffset is the preset luminance offset value. PreChorma' needs to be added with the preset chrominance offset value Chromaoffset to obtain the chrominance pixel PreChorma to be predicted.

Optionally, based on setting the luminance offset value and the chrominance offset value in the above-mentioned prediction model PreChorma = f(Lumal, Luma2, Luma3,..., LumaN), the processing device further sets a nonlinear term P', and in this case, the nonlinear term P' = (Luma1'Luma1' + midVal) >> bitDepth.

Optionally, the processing device may use a sample value of a luminance pixel at a preset location outside the current image block to be processed (also known as an encoding unit) and adjacent to the image to be processed as the above-mentioned luminance offset value Lumaoffset, and/or, use a sample value of a co-located chrominance pixel of a luminance sample at the preset location as the chrominance offset value Chromaoffset. Optionally, the processing device uses a sample value of a luminance pixel in a top reference sample row, which is outside the current image block to be processed and is adjacent to the current image block to be processed, as the luminance offset value Lumaoffset, or uses a sample value of a luminance pixel in a left reference sample row, which is outside the current image block to be processed and is adjacent to the current image block to be processed, as the luminance offset value Lumaoffset, or uses a sample value of a luminance pixel in a top-left corner, which is outside the current image block to be processed and is adjacent to the current image block to be processed, as the luminance offset value Lumaoffset. And/or, the processing device uses a sample value of a chrominance pixel in the top reference sample row, which is outside the current image block to be processed and is adjacent to the current image block to be processed, as the chrominance offset value Chromaoffset, or uses a sample value of a chrominance pixel in the left reference sample row, which is outside the current image block to be processed and is adjacent to the current image block to be processed, as the chrominanceoffset value Chromaoffset, or uses a sample value of a chrominance pixel in the top-left corner, which is outside the current image block to be processed and is adjacent to the current image block to be processed, as the chrominance offset value Chromaoffset.

In this embodiment, during the encoding or decoding process for the image, the processing device predicts the chrominance information of the pixel to be predicted according to the at least one first luminance value of the at least one non-down-sampled luminance pixel in the current image block to be processed that has not undergone down-sampling processing, the at least one luminance offset of the image block, and the at least one chrominance offset of the image block, thereby obtaining the chrominance prediction result for the pixel to be predicted. Therefore, the magnitudes of the luminance value and the chrominance value used in the process of determining the weight coefficients during cross-component prediction can be reduced (e.g., the magnitudes of the luminance value and the chrominance value used in determining the above-mentioned weight coefficients c0 to c6 are reduced), thereby reducing a computational load. That is, the processing device subtracts a luminance offset value from the luminance value to obtain a smaller luminance value, then performs prediction processing on the smaller luminance value to obtain a smaller chrominance value, and finally adds a chrominance offset value to the smaller chrominance value to obtain a final chrominance predicted value, thereby effectively reducing the computational load during the computing process and/or reducing a storage space required for storing intermediate values generated during the computing process.

A second method: Determine or generate a prediction result according to at least one first luminance value and a gradient value of at least one luminance pixel.

In this embodiment, during the encoding or decoding process for an image, the processing device treats a chrominance pixel in a current image block to be processed that requires chrominance information prediction as a pixel to be predicted, and then, predicts chrominance information of the pixel to be predicted according to at least one first luminance value of at least one non-down-sampled luminance pixel in the current image block to be processed that has not undergone down-sampling processing and a gradient value of the at least one non-down-sampled luminance pixel (when there are a plurality of first luminance values, respective gradient values of the plurality of first luminance values are used), thereby determining or generating a chrominance prediction result for the pixel to be predicted.

In this way, compared to calculating gradient values of down-sampled luminance pixels after down-sampling luminance samples, directly performing gradient calculation based on the luminance values of the non-down-sampled luminance pixels that have not undergone down-sampling can ensure higher accuracy of the obtained gradient values, thereby reducing the distortion level of a prediction result obtained after prediction and/or improving the prediction quality of pixels of image blocks.

Optionally, when the processing device predicts the chrominance information of the pixel to be predicted according to the first luminance value of the non-down-sampled luminance pixel in the current image to be processed that has not undergone down-sampling processing and the gradient value of the non-down-sampled luminance pixel, if the above-mentioned prediction model PreChorma = f(Lumal, Luma2, Luma3,..., LumaN) is used to calculate the chrominance value of the chrominance pixel in the image block that requires chrominance information prediction, the prediction model PreChorma = f(Lumal, Luma2, Luma3,..., LumaN) may be transformed into: PreChorma = f(Lumal, Gx, Gy), where Gx and Gy are a horizontal gradient and a vertical gradient obtained by applying a gradient filter centered around Luma1, respectively.

Optionally, when the processing device predicts the chrominance information of the pixel to be predicted according to the first luminance value of the non-down-sampled luminance pixel in the current image to be processed that has not undergone down-sampling processing and the gradient value of the non-down-sampled luminance pixel, if the above-mentioned prediction model PreChorma=f(Luma1,Luma2,Luma3,...,LumaN) is used to calculate the chrominance value of the chrominance pixel in the image block that requires chrominance information prediction, the prediction model PreChorma=f(Luma1,Luma2,Luma3,...,LumaN) may be transformed into:predChroma=c0*Luma1+c1*Gx+c2*-Gy+c3*P+c4*B, where Luma1 is the co-located luminance pixel of the chrominance pixel to be predicted, c0 to c4 are weights, P is the nonlinear term, B is the bias term, and Gx and Gy are gradients of the co-located luminance pixel of the chrominance pixel to be predicted. In this embodiment, Luma1, Luma2, Luma3,..., and LumaN are all luminance pixels (or luminance samples) that have not undergone down-sampling processing during the cross-component intra prediction process.

Optionally, Gx=(2Luma5+Luma2+Luma7)-(2Luma6+Luma4+Luma9) and Gy=(2Luma3+Luma2+Luma4)-(2Luma8+Luma7+Luma9). As shown in FIG. 8, Luma2 is a luminance pixel to the top-left of Luma1, Luma3 is a luminance pixel above Luma1, Luma4 is a luminance pixel to the top-right of Luma1, Luma5 is a luminance pixel to the left of Luma1, Luma6 is a luminance pixel to the right of Luma1, Luma7 is a luminance pixel to the bottom-left of Luma1, Luma8 is a luminance pixel below Luma1, and Luma9 is a luminance pixel to the bottom-right of Luma1.

Optionally, the processing device may use a gradient flag to indicate whether to calculate the chrominance value of the pixel to be predicted using the gradient.

Optionally, if the gradient flag has a first value (1), the processing device calculates the chrominance value of the pixel to be predicted using the gradient; and/or if the gradient flag has a second value (0), the processing device calculates the chrominance value of the pixel to be predicted using the luminance value of the luminance pixel without using the gradient of the luminance value.

In this embodiment, compared to a solution in which no gradient value is used, by utilizing the gradient value of the luminance pixel, the processing device may predict the chrominance information of the pixel to be predicted according to the at least one first luminance value of the at least one non-down-sampled luminance pixel in the current image block to be processed that has not undergone down-sampling processing and the gradient value of the at least one non-down-sampled luminance pixel, thereby obtaining the chrominance prediction result, allowing the prediction model to incorporate information about pixel edge variations, and thus enhancing the prediction quality of the image block when predicting the pixel chrominance information for the image block containing an object edge.

Optionally, during the encoding or decoding process for the image, after treating the chrominance pixel in the current image block to be processed that requires chrominance information prediction as a pixel to be predicted, the processing device may also predict chrominance information of the pixel to be predicted according to at least one first luminance value of at least one non-down-sampled luminance pixel in the current image block to be processed that has not undergone down-sampling processing, at least one luminance offset of the image block, at least one chrominance offset of the image block, and a gradient value of the at least one non-down-sampled luminance pixel (e.g., when there are a plurality of first luminance values, respective gradient values of the plurality of first luminance values are used), thereby determining or generating a chrominance prediction result for the pixel to be predicted.

A third method: Determine or generate intermediate prediction result for a pixel to be predicted according to at least one first luminance value, and determine or generate a prediction result according to the intermediate prediction result.

In this embodiment, during the encoding or decoding process for an image, the processing device uses a chrominance pixel in the current image block to be processed that requires chrominance information prediction as the pixel to be predicted. The process of determining the pixel to be predicted includes: first predicting chrominance information of the pixel to be predicted according to at least one first luminance value of at least one non-down-sampled luminance pixel in the current image block to be processed that has not undergone down-sampling processing, thereby obtaining the intermediate prediction result regarding the chrominance information of the pixel to be predicted, and then performing further calculation processing according to the intermediate prediction result to determine or generate the chrominance prediction result for the pixel to be predicted.

Optionally, the above-mentioned intermediate prediction result regarding the chrominance information of the pixel to be predicted includes: a first intermediate prediction result and/or a second intermediate prediction result. Optionally, the above-mentioned step of determining or generating the prediction result according to the intermediate prediction result may include:

performing weighted processing on the first intermediate prediction result and the second intermediate prediction result to determine or generate the prediction result.

Optionally, when predicting the chrominance information of the pixel to be predicted in the current image block to be processed, the processing device may also use different cross-component intra prediction formulas (also known as cross-component intra prediction models) to determine a plurality of chrominance values for the pixel to be predicted, and then perform weighted fusion on the plurality of chrominance values to obtain the final chrominance value of the pixel to be predicted.

Optionally, the above-mentioned first intermediate prediction result is determined or generated according to at least one first luminance value, while the second intermediate prediction result is determined or generated according to a gradient value of at least one luminance pixel.

Optionally, the gradient value of the at least one luminance pixel is a gradient value of at least one non-down-sampled luminance pixel.

Optionally, the gradient value $S_G$ of the above-mentioned at least one non-down-sampled luminance pixel may be determined through a plurality of gradient filters. The various gradient filters may be gradient filters with Sobel operators, Prewitt operators, Roberts operators, and Laplacian operators. In an implementation, a first gradient value of the above-mentioned at least one non-down-sampled luminance pixel may be determined through a first gradient filter (e.g., one of the various gradient filters), and a second gradient value of the above-mentioned at least one non-down-sampled luminance pixel may be determined through a second gradient filter (e.g., another one of the various gradient filters). Subsequently, the gradient value $S_G$ is obtained by performing weighted processing on the first gradient value and the second gradient value. In an embodiment, the appropriate first gradient filter and the appropriate second gradient filter may be selected from the plurality of gradient filters according to usage conditions of the plurality of gradient filters during the encoding and decoding process (e.g., historical usage conditions).

Optionally, the processing device may use the above-mentioned prediction model predChromaVal=c0*Luma1+c1*Luma2+c2*Luma3+c3*Luma4+c4*Luma5+c5*P+c6*B to determine or generate the first intermediate prediction result for the pixel to be predicted: the chrominance value ChromaA1, and use the above-mentioned prediction model predChroma = c0Luma1 + c1Gx + c2Gy + c3P + c4B to determine or generate the second intermediate prediction result for the pixel to be predicted: the chrominance value ChromaA2. Finally, weighted processing is performed on the chrominance value ChromaA1 and the chrominance value ChromaA2 to determine the final chrominance value ChromaFinal for the pixel to be predicted.

Optionally, weights for the weighted processing are determined or generated according to distortion levels corresponding to the first intermediate prediction result and the second intermediate prediction result.

Optionally, the processing device may perform weighted processing on the intermediate prediction result regarding the chrominance information of the pixel to be predicted according to the formula: ChromaFinal=k1*ChromaA1+k2*ChromaA2, where k1 and k2 are weights.

Optionally, when the processing device is the encoder, the processing device may calculate a rate-distortion cost J1 of the chrominance block composed of the chrominance value ChromaA1 obtained using the prediction model predChromaVal=c0*Luma1+c1*Luma2+c2*Luma3+c3*Luma4+c4*Luma5+c5*P+c6*B, and calculate a rate-distortion cost J2 of the chrominance block composed of the chrominance value ChromaA2 obtained using the prediction model predChroma=c0*Luma1+c1*Gx+c2*Gy+c3*P+c4*B. Then, values of k1 and k2 are determined according to a ratio between the rate-distortion cost J1 and the rate-distortion cost J2. Optionally, if J1/J2 = 1:1, k1/k2 = 1:1, or if J1/J2 = 1:2, k1/k2 = 2:1.

In this embodiment, when predicting the chrominance information for the pixel to be predicted, the processing device first predicts the intermediate prediction result regarding the chrominance information of the pixel to be predicted and then performs further weighted calculation processing according to the plurality of intermediate prediction result to determine or generate a final chrominance prediction result for the pixel to be predicted, thereby obtaining a better chrominance prediction result for the pixel to be predicted.

A fourth method: Determine or generate a prediction result according to at least one first luminance value and positional information of at least one non-down-sampled luminance pixel.

In this embodiment, during the encoding or decoding process for an image, the processing device treats a chrominance pixel in a current image block to be processed that requires chrominance information prediction as a pixel to be predicted, and then, predicts chrominance information of the pixel to be predicted according to at least one first luminance value of the at least one non-down-sampled luminance pixel in the current image block to be processed that has not undergone down-sampling processing and the positional information of the at least one non-down-sampled luminance pixel, thereby determining or generating a chrominance prediction result for the pixel to be predicted.

In this embodiment, if a video or image format of the current image block to be processed is 4:2:2 or 4:2:0, during the image prediction process conducted by the processing device, a discrepancy in dimensions between a luminance block and a corresponding chrominance block may occur in the image prediction process if the luminance pixel has not undergone down-sampling. Accordingly, the processing device sets positional scaling information to determine, according to the positional scaling information, the positional information of the chrominance pixel to be predicted in the current image block to be processed, thereby accurately positioning the location of the luminance pixel corresponding to the chrominance pixel to be predicted when the dimensions of the luminance block and the corresponding chrominance block do not match.

Optionally, the positional information of the non-down-sampled luminance pixel may be determined or generated according to at least one positional scaling information. Optionally, as shown in FIG. 9A and FIG. 9B (in the figures, "X" represents a location of a luminance pixel/sample in an image, and "O" represents a location of a chrominance pixel/sample in the image), when the processing device uses the positional scaling information to determine the positional information of the chrominance pixel to be predicted in the current image block to be processed, if the positional scaling information in an x-direction is stepX, the positional scaling information in a y-direction is stepY, and the location of the chrominance sample to be predicted is in an i-th row and a j-th column of the chrominance block, a location of a co-located luminance sample of the chrominance sample to be predicted is in an i*stepY-th row and a j*stepX-th column of the luminance block. For example, if stepX is 2, stepY is 1, and the location of the chrominance sample to be predicted is in a 1st row and a 2nd column of the chrominance block, the location of the co-located luminance sample is in the 1st row and a 4th column of the luminance block. Step size information stepX of 2 and stepY of 1 corresponds to the 4:2:2 video/image format. If stepX is 2, stepY is 2, and the location of the chrominance sample to be predicted is in the 1st row and the 2nd column of the chrominance block, the location of the co-located luminance sample of the chrominance sample to be predicted is in the 2nd row and the 4th column of the luminance block. Step size information stepX of 2 and stepY of 2 corresponds to the 4:2:0 video/image format.

Optionally, the processing device may obtain or generate the down-sampled luminance pixel by performing down-sampling processing on the non-down-sampled luminance pixel. Optionally, as shown in FIG. 10, the processing device may obtain a sample value of a down-sampled luminance sample by averaging samples in an adjacent region, and down-sampling processing by the processing device through averaging the samples in the adjacent region may include more background information of the image block. Optionally, as shown in FIG. 11, the processing device may also use a maximum value of the samples in the adjacent region as the sample value of the down-sampled luminance sample, and the processing device using the maximum value of the samples in the adjacent region as the sample value of the down-sampled luminance sample may retain more texture information.

In other embodiments, down-sampling processing may also be performed using other methods. According to an implementation of this application, a down-sampled pixel SD may be obtained using various down-sampling methods. Optionally, a first down-sampled pixel is obtained by an averaging method, and a second down-sampled pixel is obtained by taking the maximum value. Subsequently, the down-sampled pixel SD is obtained by performing weighted processing on the first down-sampled pixel and the second down-sampled pixel. Employing the plurality of down-sampling methods to obtain the down-sampled pixel provides a novel down-sampling method, thereby enhancing the flexibility of encoding and decoding.

In this embodiment, the chrominance information of the pixel to be predicted is predicted according to the at least one first luminance value of the at least one non-down-sampled luminance pixel in the current image block to be processed that has not undergone down-sampling processing and the positional information of the at least one non-down-sampled luminance pixel, thereby obtaining the chrominance prediction result for the pixel to be predicted. Accordingly, since the positional information of the luminance pixel is used in determining or generating the predicted chrominance result, the prediction quality for the image block can be further enhanced when pixel chrominance information prediction is performed on the image block correlated with the pixel value and the pixel location.

Optionally, during the encoding or decoding process for the image, after treating the chrominance pixel in the current image block to be processed that requires chrominance information prediction as the pixel to be predicted, the processing device may also predict the chrominance information of the pixel to be predicted according to at least one first luminance value of at least one non-down-sampled luminance pixel in the current image block to be processed that has not undergone down-sampling processing, at least one luminance offset of the image block, at least one chrominance offset of the image block, a gradient value of the at least one non-down-sampled luminance pixel (e.g., when there are a plurality of first luminance values, respective gradient values of the plurality of first luminance values are used) and the positional information of the at least one non-down-sampled luminance pixel, thereby determining or generating the chrominance prediction result for the pixel to be predicted.

A fifth method: Determine or generate a prediction result according to at least one first luminance value and a second luminance value of at least one down-sampled luminance pixel.

In this embodiment, during the encoding or decoding process for an image, the processing device uses a chrominance pixel in the current image block to be processed that requires chrominance information prediction as a pixel to be predicted. The process of determining the pixel to be predicted includes: predicting chrominance information of the pixel to be predicted according to at least one first luminance value of at least one non-down-sampled luminance pixel in the current image block to be processed that has not undergone down-sampling processing and the second luminance value of the at least one down-sampled luminance pixel that has undergone down-sampling processing, thereby determining or generating the chrominance prediction result for the pixel to be predicted.

Optionally, the processing device predicts the chrominance information of the pixel to be predicted according to the at least one first luminance value of the at least one non-down-sampled luminance pixel in the current image block to be processed that has not undergone down-sampling processing, to obtain the chrominance prediction result. Optionally, after the non-down-sampled luminance pixel is down-sampled to obtain the down-sampled luminance pixel, the chrominance information of the pixel to be predicted is predicted according to the at least one second luminance value of the down-sampled luminance pixel, to obtain another chrominance prediction result. Subsequently, the processing device fuses the two chrominance prediction results obtained through two cross-component intra predictions to derive the final chrominance prediction result for the pixel to be predicted.

Optionally, in a case where the current image block to be processed is the above-mentioned 4:2:2 or 4:2:0 video or image format, the processing device may employ the cross-component intra prediction method to perform two cross-component intra predictions on the current image block to be processed, and fuse the results obtained through two cross-component intra predictions to derive the final prediction result. Optionally, as shown in FIG. 12, on one hand, the processing device employs the cross-component intra prediction method to down-sample the luminance block A to obtain the down-sampled luminance block A', and then determines a chrominance prediction result for a chrominance pixel in a chrominance block a1 according to a luminance pixel in the down-sampled luminance block A'. On the other hand, the processing device directly determines a chrominance prediction result for a chrominance pixel in a chrominance block a2 according to the luminance pixel in the luminance block A. Subsequently, the processing device fuses the chrominance block a1 and the chrominance block a2 to obtain the chrominance prediction result for the chrominance block a.

Optionally, when the processing device performs weighted fusion of the chrominance prediction result obtained through down-sampled cross-component intra prediction (chrominance value a1) and the chrominance prediction result obtained through non-down-sampled cross-component intra prediction (chrominance value a2), on one hand, the chrominance value a1 of the chrominance sample to be predicted is obtained by employing the down-sampled cross-component intra prediction, and the chrominance value a2 of the chrominance sample to be predicted is obtained by employing the non-down-sampled cross-component intra prediction. Then, weighted fusion is performed on the chrominance value a1 and the chrominance value a2 to obtain the weighted chrominance value a. Optionally, $a = w1 * a1 + w2 * a2$, where w1 and w2 are weights.

Optionally, when the processing device is the encoder, the processing device may respectively calculate the rate-distortion cost J1 of the chrominance block composed of a plurality of chrominance values a1 obtained through the down-sampled cross-component intra prediction and the rate-distortion cost J2 of the chrominance block composed of a plurality of chrominance values a2 obtained through the non-down-sampled cross-component intra prediction, thereby determining values of w1 and w2 according to the ratio between the rate-distortion cost J1 and the rate-distortion cost J2. Optionally, if J2/J1 = 1:1, w1/w2 = 1:1; and if J2/J1 = 1:2, w1/w2 = 2:1.

In this embodiment, the processing device determines the chrominance value of the chrominance pixel using the non-down-sampled luminance value and the down-sampled luminance value in the luminance image block. Although the luminance information may be lost during the down-sampling process, coordinate ranges corresponding to the down-sampled luminance value and the luminance value corresponding to the non-down-sampling process differ in the image with the 4:2:2 or 4:2:0 video format. Therefore, compared to the coordinate range of the luminance value corresponding to the non-down-sampling process, the coordinate range corresponding to the down-sampled luminance value is broader. Therefore, by fusing the chrominance predicted values corresponding to the luminance values obtained through both down-sampling and non-down-sampling processes, the processing device can achieve more accurate chrominance predicted values.

Optionally, during the encoding or decoding process for the image, after treating the chrominance pixel in the current image block to be processed that requires chrominance information prediction as a pixel to be predicted, the processing device may also predict chrominance information of the pixel to be predicted according to at least one first luminance value of at least one non-down-sampled luminance pixel in the current image block to be processed that has not undergone down-sampling processing, at least one luminance offset of the image block, at least one chrominance offset of the image block, and a second luminance value of at least one down-sampled luminance pixel that has undergone down-sampling processing, thereby determining or generating a chrominance prediction result for the pixel to be predicted.

Optionally, the processing device may also predict the chrominance information of the pixel to be predicted according to at least one first luminance value of at least one non-down-sampled luminance pixel in the current image block to be processed that has not undergone down-sampling processing, a gradient value of the at least one non-down-sampled luminance pixel (e.g., when there are a plurality of first luminance values, respective gradient values of the plurality of first luminance values are used), as well as a second luminance value of at least one down-sampled luminance pixel that has undergone down-sampling processing, thereby determining or generating the chrominance prediction result for the pixel to be predicted.

Optionally, the processing device may also predict the chrominance information of the pixel to be predicted according to at least one first luminance value of at least one non-down-sampled luminance pixel in the current image block to be processed that has not undergone down-sampling processing, positional information of the at least one non-down-sampled luminance pixel, and a second gradient value of at least one down-sampled luminance pixel that has undergone down-sampling processing, thereby determining or generating the chrominance prediction result for the pixel to be predicted.

Optionally, the processing device may also predict the chrominance information of the pixel to be predicted according to at least one first luminance value of at least one non-down-sampled luminance pixel in the current image block to be processed that has not undergone down-sampling processing, a gradient value of the at least one non-down-sampled luminance pixel (e.g., when there are a plurality of first luminance values, respective gradient values of the plurality of first luminance values are used), positional information of the at least one non-down-sampled luminance pixel, and a second luminance value of at least one down-sampled luminance pixel that has undergone down-sampling processing, thereby determining or generating the chrominance prediction result for the pixel to be predicted.

Optionally, the processing device may also predict the chrominance information of the pixel to be predicted according to at least one first luminance value of at least one non-down-sampled luminance pixel in the current image block to be processed that has not undergone down-sampling processing, at least one luminance offset of the image block, at least one chrominance offset of the image block, a gradient value of the at least one non-down-sampled luminance pixel (e.g., when there are a plurality of first luminance values, respective gradient values of the plurality of first luminance values are used), positional information of the at least one non-down-sampled luminance pixel, and a second luminance value of at least one down-sampled luminance pixel that has undergone down-sampling processing, thereby determining or generating the chrominance prediction result for the pixel to be predicted.

Optionally, when the processing device encodes or decodes the image, after the chrominance pixel in the current image block to be processed that requires chrominance information prediction is used as the pixel to be predicted, the chrominance information of the pixel to be predicted may also be predicted using the first method, the second method, the third method, the fourth method, and/or the fifth method described above, thereby obtaining the prediction results for the chrominance information of the pixel to be predicted, the prediction results are all the intermediate prediction results, and then, weighted fusion processing is performed on the plurality of intermediate prediction results to obtain the final chrominance prediction result for the pixel to be predicted.

Optionally, assume that the processing device employs the first method, the second method, the third method, the fourth method, and/or the fifth method described above to predict the chrominance information of the pixel to be predicted, resulting in chrominance values ChromaA1, ChromaA2, ChromaA3, ChromaA4, and ChromaA5, respectively, as the prediction results for the chrominance information of the pixel to be predicted. The processing device may further treat the five chrominance values as the intermediate prediction results and perform weighted processing on the five intermediate prediction results of chrominance values ChromaA1 to ChromaA5 to determine the final chrominance value ChromaFinal for the pixel to be predicted.

Optionally, the processing device may perform weighted processing on the intermediate prediction results regarding the chrominance information of the pixel to be predicted according to the formula: ChromaFina1=k1*ChromaA1+k2*ChromaA2+k3*ChromaA3+k4*ChromaA4+k5*ChromaA5, where k1 to k5 are weights.

Optionally, when the processing device is the encoder, the rate-distortion costs J1, J2, J3, J4, and J5 for predicting the chrominance information of the pixel to be predicted may be respectively calculated using the first method the second method, the third method, the fourth method, and/or the fifth method described above. Then, the processing device may determine values of k1 to k5 according to ratios between the rate-distortion costs J1 to J5. Optionally, if J1/J2/J3/J4/J5 = 1:1:1:1:1, k1/k2/k3/k4/k5 = 1:1:1:1:1; or, if J1/J2/J3/J4/J5 = 1:2:2:1:1, k1/k2/k3/k4/k5 = 2:1:1:2:2.

Optionally, the step S101 includes at least one of :

A first method: Determine or generate a prediction result according to at least one first luminance value, at least one luminance offset, and at least one chrominance offset.

Similar to the principles and spirit of step S100 described above, in this embodiment, during the encoding or decoding process for an image by the processing device, the processing device predicts chrominance information of the pixel to be predicted according to at least one first luminance value of at least one down-sampled luminance pixel in the current image block to be processed, at least one luminance offset of the image block, and at least one chrominance offset of the image block, thereby obtaining the chrominance prediction result for the pixel to be predicted. Therefore, the magnitudes of the luminance value and the chrominance value used in the process of determining the weight coefficients during cross-component prediction can be reduced (e.g., the magnitudes of the luminance value and the chrominance value used in determining the above-mentioned weight coefficients c0 to c6 are reduced), thereby reducing a computational load. That is, the processing device subtracts a luminance offset value from the luminance value to obtain a smaller luminance value, then performs prediction processing on the smaller luminance value to obtain a smaller chrominance value, and finally adds a chrominance offset value to the smaller chrominance value to obtain a final chrominance predicted value, thereby effectively reducing the computational load during the computing process and/or reducing a storage space required for storing intermediate values generated during the computing process.

A second method: Determine or generate a prediction result according to at least one first luminance value and a gradient value of at least one down-sampled luminance pixel.

Similar to the principles and spirit of step S100 described above, in this embodiment, compared to a solution in which no gradient value is used, by utilizing the gradient value of the luminance pixel, the processing device may predict chrominance information of the pixel to be predicted according to at least one first luminance value of the at least one down-sampled luminance pixel in the current image block to be processed and the gradient value of the at least one down-sampled luminance pixel, thereby obtaining the chrominance prediction result, allowing the prediction model to incorporate information about pixel edge variations, and thus enhancing the prediction quality of the image block when predicting the pixel chrominance information for the image block containing an object edge.

A third method: Determine or generate an intermediate prediction result for a pixel to be predicted according to at least one first luminance value, and determine or generate a prediction result according to the intermediate prediction result.

Optionally, a gradient value of at least one luminance pixel is a gradient value of at least one down-sampled luminance pixel.

Similar to the principles and spirit of step S100 described above, in this embodiment, when predicting chrominance information for the pixel to be predicted, the processing device first predicts an intermediate prediction result regarding the chrominance information of the pixel to be predicted and then performs further weighted calculation processing according to the plurality of intermediate prediction results to determine or generate a final chrominance prediction result for the pixel to be predicted, thereby obtaining a better chrominance prediction result for the pixel to be predicted.

A fourth method: Determine or generate a prediction result according to at least one first luminance value and positional information of at least one down-sampled luminance pixel.

Optionally, the down-sampled luminance pixel is a second down-sampled luminance pixel, which is obtained or generated by down-sampling the down-sampled luminance pixel and/or another down-sampled luminance pixel.

Similar to the principles and spirit of step S100 described above, in this embodiment, chrominance information of a pixel to be predicted is predicted according to at least one first luminance value of at least one down-sampled luminance pixel in the current image block to be processed that has undergone down-sampling processing, and positional information of the at least one down-sampled luminance pixel, thereby obtaining the chrominance prediction result for the pixel to be predicted. Accordingly, since the positional information of the luminance pixel is used in determining or generating the predicted chrominance result, the prediction quality for the image block can be further enhanced when pixel chrominance information prediction is performed on the image block correlated with a pixel value and a pixel location.

A fifth method: Determine or generate a prediction result according to at least one first luminance value and a second luminance value of at least one other down-sampled luminance pixel.

Similar to the principles and spirit of step S100 described above, in this embodiment, the processing device may perform two different down-sampling processes on a luminance image block to obtain a first luminance value of a first down-sampled luminance pixel resulting from the first down-sampling process and a second luminance value of a second down-sampled luminance pixel resulting from the second down-sampling process. Therefore, by fusing a first chrominance predicted value and a second chrominance predicted value obtained from the first luminance value and the second luminance value, respectively, the processing device may obtain a more accurate chrominance predicted value.

It should be noted that the various implementations and embodiments mentioned in this application may be combined with each other without departing from the fundamental principles and spirit of this application.

**Third Embodiment**

Based on any one of the above-mentioned embodiments, before the step S10, the image processing method in this application further includes:

acquiring or determining a first pixel flag according to a dimension of a luminance block where luminance pixels (non-down-sampled luminance pixels and/or down-sampled luminance pixels) are located;

if the first pixel flag is a first value, the step S10 includes: directly determining or generating the prediction result according to the luminance pixels (the non-down-sampled luminance pixels and/or the down-sampled luminance pixels);

alternatively, if the first pixel flag is a second value, the step S10 includes: performing down-sampling processing on the luminance pixels to obtain the down-sampled luminance pixels and determining or generating the prediction result according to a second luminance value of the down-sampled luminance pixels.

Optionally, if the first pixel flag is the second value, the step S10 includes: performing down-sampling processing on the non-down-sampled luminance pixels to obtain the down-sampled luminance pixels and determining or generating the prediction result according to a second luminance value of the down-sampled luminance pixels.

Optionally, the luminance pixel is the first down-sampled luminance pixel, and the down-sampled luminance pixel is the second down-sampled luminance pixel. If the first pixel flag is the second value, the step S10 includes: performing down-sampling processing on the first down-sampled luminance pixel to obtain the second down-sampled luminance pixel and determining or generating the prediction result according to a second luminance value of the second down-sampled luminance pixel.

In this embodiment, the processing device may acquire or determine the first pixel flag according to the dimension of the image block and then determine whether to perform down-sampling on the luminance pixels based on different values of the first pixel flag before predicting the chrominance information based on the luminance value of the luminance pixels. Optionally, if the first pixel flag acquired or determined according to the dimension of the image block is the first value, the processing device does not perform down-sampling on the luminance pixels but directly determines or generates the chrominance prediction result according to the non-down-sampled luminance pixels.

And/or, if the first pixel flag is the second value, the processing device performs down-sampling processing on the non-down-sampled luminance pixels to obtain the down-sampled luminance pixels and then determines or generates the chrominance prediction result according to a second luminance value of the down-sampled luminance pixels.

Optionally, when determining whether to perform down-sampling on the luminance pixels according to the dimension of the image block, if the dimension of the image block is greater than a threshold, the processing device performs down-sampling processing and then determines or generates the chrominance prediction result according to a second luminance value of the down-sampled luminance pixels. If the dimension of the image block is smaller than the threshold, no down-sampling processing is performed but the chrominance prediction result is directly determined or generated according to the non-down-sampled luminance pixels.

In this embodiment, since the processing device requires a storage unit to store the luminance pixels used for chrominance prediction during the encoding and decoding processing of the image block, for a larger luminance image block, if no down-sampling processing is performed on the larger luminance image block, a larger storage unit is required to store these luminance pixels. Therefore, down-sampling the larger luminance image block may allow for the use of a relatively smaller storage unit to store these luminance pixels for chrominance prediction. However, in block partitioning, a larger region is a region with flat pixel variations. Therefore, the quality of the chrominance prediction result obtained after down-sampling the luminance image block tends to be satisfactory.

Optionally, to reduce cross-component redundancy, in the video coding standards, the processing device may employ a cross-component model for chrominance prediction of the current block to be processed. Optionally, the processing device may predict the chrominance pixels based on reconstructed luminance samples from the same image block and the cross-component model. Optionally, the cross-component model includes a cross-component linear model (CCLM) and a convolutional cross-component model (CCCM). As shown in FIG. 13, in a case where the video or image format of the current image block to be processed is 4:2:2 or 4:2:0, the dimensions of a luminance block and a chrominance block included in the image block are not equal.

Optionally, for the above-mentioned image block with the 4:2:2 or 4:2:0 video or image format, if the processing device uses the luminance pixels of the luminance block in the image block to predict the chrominance pixels of the chrominance block, the processing device may first perform down-sampling processing on the luminance block to obtain a down-sampled luminance block, and then determine the chrominance pixels in the chrominance block according to the luminance pixels in the down-sampled luminance block. Optionally, as shown in FIG. 14, the processing device first down-samples the luminance block A to obtain the down-sampled luminance block A', and then determines chrominance pixels in a chrominance block a according to luminance pixels in the down-sampled luminance block A'.

Optionally, the processing device may also determine the chrominance pixels in the chrominance block directly according to the non-down-sampled luminance pixels in the luminance block without performing down-sampling processing on the luminance block. Optionally, as shown in FIG. 15, the processing device does not need to down-sample the luminance block A (i.e., there is no need to first obtain the luminance block A' in FIG. 14) but instead directly determines the chrominance pixels in the chrominance block a according to the non-down-sampled luminance pixels in the luminance block A.

Optionally, for the above-mentioned image block with the 4:2:2 or 4:2:0 video or image format, if the processing device uses the luminance pixels of the luminance block in the image block to predict the chrominance pixels of the chrominance block, non-down-sampled cross-component intra prediction may be performed on some image blocks in the video image, and down-sampled cross-component intra prediction may be performed on other image blocks in the video image, thereby enhancing the flexibility of chrominance prediction for the image blocks.

Optionally, the processing device may indicate whether to use the down-sampled cross-component intra prediction or non-down-sampled cross-component intra prediction by determining the above-mentioned first pixel flag. Optionally, if the first pixel flag has the first value (e.g., the first value is 1), the processing device uses the non-down-sampled cross-component intra prediction without down-sampling the luminance pixels but directly determines or generates the chrominance prediction result according to the non-down-sampled luminance pixels. And/or, if the first pixel flag is the second value (e.g., the second value is 0), the processing device uses the down-sampled cross-component intra prediction, to down-sample the luminance pixels to obtain the down-sampled luminance pixels, and then determines or generates the chrominance prediction result according to a second luminance value of the down-sampled luminance pixels.

Optionally, a value of the first pixel flag may be determined through a plurality of methods. Optionally, when the processing device is the encoder, for one image block, if the rate-distortion cost corresponding to the chrominance block obtained through the down-sampled cross-component intra prediction is smaller than the rate-distortion cost corresponding to the chrominance block obtained through the non-down-sampled luminance cross-component intra prediction, the processing device adopts the down-sampled luminance cross-component intra prediction for the image block. In this case, the value of the first pixel flag is set to the second value (e.g., the second value is 0). Optionally, for one image block, if the rate-distortion cost corresponding to the chrominance block obtained through the down-sampled luminance cross-component intra prediction is greater than the rate-distortion cost corresponding to the chrominance block obtained through the non-down-sampled luminance cross-component intra prediction, the processing device adopts the non-down-sampled luminance cross-component intra prediction for the image block. In this case, the value of the first pixel flag is set to the first value (e.g., the first value is 1).

Optionally, the processing device may determine the value of the above-mentioned first pixel flag according to the dimension of the image block or the dimension of the luminance block within the image block. Optionally, if a length and/or a width of the image block are/is greater than 32, the value of the first pixel flag is set to the second value (e.g., the second value is 0), meaning that the processing device adopts the down-sampled luminance cross-component intra prediction for the image block. If the length and/or the width of the image block are/is less than or equal to 32, the value of the first pixel flag is set to the first value (e.g., the first value is 1), meaning that the processing device adopts the non-down-sampled luminance cross-component intra prediction for the image block.

Optionally, in this embodiment, the image processing method in this application further includes:

determining a prediction mode used for performing the step S10 according to values of the second pixel flag and the gradient flag.

In this embodiment, the processing device may acquire or determine the second pixel flag and/or the gradient flag and then determine, according to the values of the second pixel flag and the gradient flag, the prediction mode used to predict the chrominance information of the pixel to be predicted in the image block in the above-mentioned step S10.

Optionally, when performing the above-mentioned step S10 to predict the chrominance information of the pixel to be predicted within the image block, the processing device may specifically adopt the following four cross-component prediction modes:

Mode 1: Cross-component intra prediction employing down-sampling processing and gradient calculation processing.

Mode 2: Cross-component intra prediction employing down-sampling processing but not gradient calculation processing.

Mode 3: Cross-component intra prediction not employing down-sampling processing but employing gradient calculation processing (compared to Mode 1, Mode 3 directly performs gradient calculations based on non-down-sampled luminance values, resulting in higher precision in calculated gradient values).

Mode 4: Cross-component intra prediction not employing down-sampling processing or gradient calculation processing.

Optionally, the prediction method employing down-sampling processing can enable the luminance block for prediction and the chrominance block to have consistent dimensions, thereby eliminating the need to consider the problem about dimension mismatch in subsequent calculations and simplifying the calculations. And/or, due to the adoption of the down-sampling processing method, the dimension of the luminance block after down-sampling is reduced, thereby saving a storage space to a certain extent. Optionally, although the prediction method not employing down-sampling processing results in the dimension mismatch between the luminance block for prediction and the chrominance block, necessitating consideration of how to match dimensions in subsequent calculations, the prediction method not employing down-sampling processing directly utilizes the non-down-sampled luminance image block for prediction, thereby avoiding the loss of the luminance information during the down-sampling process, and making the prediction method not employing down-sampling processing more suitable for scenarios of encoding and decoding operations on images or videos requiring higher clarity and detail, and/or scenarios where the impact of the lost luminance information during down-sampling on chrominance prediction needs to be reduced. Optionally, according to the prediction method utilizing luminance values of luminance samples without gradient values of the luminance samples, in a case where the prediction model has the same number of terms, the prediction model may use luminance values of a plurality of adjacent luminance samples for prediction. Therefore, the prediction method utilizing luminance values of luminance samples without gradient values of the luminance samples is suitable for image blocks where pixel values of pixel samples to be predicted have a stronger correlation with those of adjacent pixel samples. Optionally, compared to a prediction method not utilizing gradient values, since the prediction model includes information about pixel edge variations, the prediction method utilizing gradient values of luminance samples enhances the prediction quality for image blocks containing object edges.

In this embodiment, by combining whether to perform down-sampling processing with whether to adopt the gradient values of the luminance samples for prediction, the above-mentioned Modes 1 to 4 may be obtained, thereby allowing the encoding and decoding process to apply different modes to different scenarios, and further improving the flexibility of chrominance prediction for the pixels to be predicted.

Optionally, in Mode 1 mentioned above, the prediction model PreChorma = f(Lumal, Gx, Gy) may be used to calculate the chrominance value of the chrominance pixel requiring chrominance information prediction in the image block. PreChorma represents the chrominance pixel to be predicted, Luma1 represents the down-sampled co-located luminance pixel of the chrominance pixel to be predicted, and Gx and Gy respectively represent the horizontal gradient and the vertical gradient obtained by applying the gradient filter centered on Luma1.

Optionally, the prediction model PreChorma = f(Luma1, Gx, Gy) may also be transformed into: predChroma=-c0*Luma1+c1*Gx+c2*Gy+c3*P+c4*B, where c0 to c4 are weights, P is the nonlinear term, B is the bias term, Gx=(2Luma5+Luma2+Luma7)-(2Luma6+Luma4+Luma9), and Gy=(2Luma3+Luma2+Luma4)-(2Luma8+Luma7+Luma9). Luma2 is a luminance pixel to the top-left of Luma1, Luma3 is a luminance pixel above Luma1, Luma4 is a luminance pixel to the top-right of Luma1, Luma5 is a luminance pixel to the left of Luma1, Luma6 is a luminance pixel to the right of Luma1, Luma7 is a luminance pixel to the bottom-left of Luma1, Luma8 is a luminance pixel below Luma1, and Luma9 is a luminance pixel to the bottom-right of Luma1. Optionally, Luma1 to Luma9 represent down-sampled luminance pixels.

Optionally, in Mode 2, the prediction model PreChorma=f(Luma1, Luma2, Luma3, ..., LumaN) may be used to calculate the chrominance value of the chrominance pixel requiring chrominance information prediction in the image block. PreChorma represents the chrominance pixel to be predicted, and Luma1 to LumaN are input luminance pixels that are down-sampled luminance pixels. Optionally, Luma1 is the co-located luminance pixel of the chrominance pixel to be predicted, and Luma2, Luma3,..., and LumaN are luminance pixels around the co-located luminance pixel.

Optionally, the above-mentioned prediction model PreChorma=f(Luma1, Luma2, Luma3 ,..., LumaN), when combined with the nonlinear term P and the bias term B, may be transformed into: predChromaVal=c0*Luma1+c1*Luma2+c2*Luma3+c3*Luma4+c4*Luma5+c5*Luma6+c6*Luma7+c7*Lum a8+c8*Luma9+c9*P+c10*B, where c0 to c10 are weights, Luma2 is a luminance pixel to the top-left of Luma1, Luma3 is a luminance pixel above Luma1, Luma4 is a luminance pixel to the top-right of Luma1, Luma5 is a luminance pixel to the left of Luma1, Luma6 is a luminance pixel to the right of Luma1, Luma7 is a luminance pixel to the bottom-left of Luma1, Luma8 is a luminance pixel below Luma1, and Luma9 is a luminance pixel to the bottom-right of Luma1.

Optionally, in Mode 3, the prediction model PreChorma=f(Luma1, Gx, Gy) may be used to calculate the chrominance value of the chrominance pixel requiring chrominance information prediction in the image block. PreChorma represents the chrominance pixel to be predicted, Luma1 represents the non-down-sampled co-located luminance pixel of the chrominance pixel to be predicted, and Gx and Gy respectively represent the horizontal gradient and the vertical gradient obtained by applying the gradient filter centered on Luma1.

Optionally, the prediction model PreChorma=f(Luma1, Gx, Gy) may also be transformed into: predChroma=c0*Luma1+c1*Gx+c2*Gy+c3*P+c4*B, c0 to c4 are weights, P is the nonlinear term, B is the bias term, Gx=(2Luma5+Luma2+Luma7)-(2Luma6+Luma4+Luma9), and Gy=(2Luma3+Luma2+Luma4)-(2Luma8+Luma7+Luma9). Luma2 is a luminance pixel to the top-left of Luma1, Luma3 is a luminance pixel above Luma1, Luma4 is a luminance pixel to the top-right of Luma1, Luma5 is a luminance pixel to the left of Luma1, Luma6 is a luminance pixel to the right of Luma1, Luma7 is a luminance pixel to the bottom-left of Luma1, Luma8 is a luminance pixel below Luma1, and Luma9 is a luminance pixel to the bottom-right of Luma1. Optionally, Luma1 to Luma9 represent non-down-sampled luminance pixels.

Optionally, in Mode 4, the prediction model PreChorma=f(Luma1, Luma2, Luma3,..., LumaN) may be used to calculate the chrominance value of the chrominance pixel requiring chrominance information prediction in the image block. PreChorma represents the chrominance pixel to be predicted, and Luma1 to LumaN are input luminance pixels that are non-down-sampled luminance pixels. Optionally, Luma1 is the co-located luminance pixel of the chrominance pixel to be predicted, and Luma2, Luma3,..., and LumaN are luminance pixels around the co-located luminance pixel.

Optionally, the above-mentioned prediction model PreChorma=f(Luma1,Luma2,Luma3,...,LumaN), when combined with the nonlinear term P and the bias term B, may be transformed into: predChromaVal=c0*Luma1+c1*Luma2+c2*Luma3+c3*Luma4+c4*Luma5+c5*Luma6+c6*Luma7+c7*Lum a8+c8*Luma9+c9*P+c10*B, where c0 to c10 are weights, Luma2 is a luminance pixel to the top-left of Luma1, Luma3 is a luminance pixel above Luma1, Luma4 is a luminance pixel to the top-right of Luma1, Luma5 is a luminance pixel to the left of Luma1, Luma6 is a luminance pixel to the right of Luma1, Luma7 is a luminance pixel to the bottom-left of Luma1, Luma8 is a luminance pixel below Luma1, and Luma9 is a luminance pixel to the bottom-right of Luma1.

Optionally, when the processing device, functioning as an encoding device, encodes the image, the processing device may select the optimal chrominance prediction mode from the four chrominance prediction modes: Mode 1 to Mode 4 mentioned above according to rate-distortion optimization (RDO).

Optionally, if the rate-distortion optimization (RDO) indicates that Mode 1 among the above-mentioned four chrominance prediction modes provides the best prediction for a chrominance block within an image block X, the value of the second pixel flag is set to "1", and the gradient flag is also set to "1".

Optionally, if the RDO or an SATD algorithm indicates that Mode 2 among the above-mentioned four chrominance prediction modes provides the best prediction for the chrominance block within the image block X, the value of the second pixel flag is set to "1", and the gradient flag is set to "0".

Optionally, as shown in FIG. 16, the processing device, functioning as the decoder, may parse out the second pixel flag and the gradient flag. If the value of the second pixel flag is 1, the processing device determines to adopt down-sampling processing; and/or, if the value of the second pixel flag is 0, the processing device determines not to perform down-sampling processing.

Optionally, if the value of the gradient flag is 1, the processing device determines to use the gradient values of the luminance samples to determine the corresponding chrominance sample; and/or, if the value of the gradient flag is 0, the processing device determines not to use the gradient values of the luminance samples to determine the corresponding chrominance samples. That is, based on combinations such as "11", "01", "10", and "00", the processing device determines which specific mode from Mode 1, Mode 2, Mode 3, or Mode 4 mentioned above to adopt when performing the above-mentioned step S10 to predict the chrominance information of the pixel to be predicted within the image block.

Optionally, the processing device may also use a sum of absolute differences (SAD) algorithm (i.e., calculating a sum of absolute errors between a predicted block and a source image) or the SATD algorithm (i.e., calculating a sum of absolute values of coefficients after Hadamard transforming residuals) to set the values of the second pixel flag and the gradient flag instead of using the above-mentioned RDO algorithm.

In this embodiment, four prediction modes are obtained by combining two factors: whether to perform down-sampling and whether to adopt the gradient values of the luminance samples. Accordingly, the processing device may select the optimal chrominance prediction mode from the plurality of chrominance prediction modes according to the RDO or SATD algorithm, thereby increasing the flexibility of the processing device in predicting the chrominance pixels within the image block.

An embodiment of this application further provides a processing device, including a memory and a processor. The memory has an image processing program stored therein. The image processing program, when executed by the processor, causes the steps of the image processing method according to any one of the above-mentioned embodiments to be implemented.

An embodiment of this application further provides a storage medium, having an image processing program stored therein. The image processing program, when executed by a processor, causes the steps of the image processing method according to any one of the above-mentioned embodiments to be implemented.

In the embodiments of the processing device and the storage medium provided in this application, all technical features of any one of the above-mentioned image processing method embodiments may be included. The expansions and explanations in the specification are basically the same as those in the various embodiments of the method described above, and details are not provided herein.

An embodiment of this application further provides a computer program product, including computer program code. The computer program code, when run on a computer, causes a computer to perform the methods in the above-mentioned possible implementations.

An embodiment of this application further provides a chip, including a memory and a processor. The memory is configured to store a computer program. The processor is configured to invoke and run the computer program from the memory, thereby allowing a device provided with the chip to perform the method described in the various possible implementations above.

It should be understood that the above-mentioned scenarios are merely examples and do not constitute limitations on the application scenarios of the technical solutions provided in the embodiments of this application. The technical solutions of this application may also be applied to other scenarios. For example, those of ordinary skill in the art may understand that with the evolution of system architectures and the emergence of new business scenarios, the technical solutions provided in the embodiments of this application are equally applicable to similar technical problems.

The sequence numbers of the above-mentioned embodiments of this application are merely for description purpose but do not indicate the preference of the embodiments.

The steps of the method in the embodiment of this application may have undergone sequence adjusting, merging and deleting according to actual needs.

The units in the device in the embodiments of this application may be combined, divided, and deleted according to actual needs.

In this application, for the same or similar term concepts, technical solutions, and/or application scenario descriptions, detailed descriptions are generally provided only upon the first occurrence. For subsequent repetitions, to maintain brevity, detailed elaborations are generally omitted. When understanding the technical solutions and other content of this application, for the same or similar term concepts, technical solutions, and/or application scenario descriptions that are not elaborated in detail later, reference may be made to relevant detailed descriptions provided earlier. In this application, the descriptions of the embodiments have respective focuses. For a part that is not described in detail or recorded in an embodiment, reference may be made to related descriptions in other embodiments.

Various technical features of the technical solutions of this application may be combined at will. For brevity of the description, not all possible combinations of the various technical features of the above-mentioned embodiments are described. However, the combinations of these technical features should be considered within the scope recorded by this application as long as there is no contradiction.

According to the descriptions of the above-mentioned implementations, those skilled in the art may clearly understand that the methods in the above-mentioned embodiments may be implemented by using software combined with a necessary general-purpose hardware platform, or certainly may be implemented by using hardware, but in many cases, the former is a preferred implementation. Based on such understanding, the technical solutions of this application essentially, or the part contributing to the prior art may be presented in the form of a software product. The computer software product is stored in a storage medium as mentioned above (e.g., a read-only memory (ROM)/random access memory (RAM), a magnetic disk, and an optical disc), and includes several instructions to cause a terminal device (e.g., a mobile phone, a computer, a server, a controlled terminal, or a network device) to perform the methods described in the embodiments of this application.

The above-mentioned embodiments may be fully or partially implemented through software, hardware, firmware, or any combination thereof. When implemented using the software, the above-mentioned embodiments may be fully or partially implemented in the form of the computer program product. The computer program product includes one or more computer instructions. When the computer program instructions are loaded and executed on the computer, the processes or functions described in the embodiments of this application are fully or partially generated. The computer may be a general-purpose computer, a special-purpose computer, a computer network, or another programmable apparatus. The computer instructions may be stored in the storage medium or transmitted from one storage medium to another storage medium. For example, the computer instructions may be transmitted from a website, a computer, a server, or a data center to another website, computer, server, or data center in a wired (e.g., a coaxial cable, an optical fiber, and a digital subscriber line) or wireless (e.g., infrared, wireless, and microwave) manner. The storage medium may be any available medium accessible by the computer or may be a server, a data center, and another data storage device integrating one or more available media. The available medium may be a magnetic medium (e.g., a floppy disk, a memory disk, and a magnetic tape), an optical medium (e.g., a digital versatile disc (DVD)), or a semiconductor medium (e.g., a solid state disk (SSD)), etc. The above are merely preferred embodiments of this application and are not intended to limit the scope of the patent of this application. Any equivalent structures or equivalent process transformations made using the content of the specification and accompanying drawings of this application, or direct or indirect applications in other related technical fields, are similarly included within the scope of patent protection of this application.

## Claims

1. An image processing method, comprising:
step S10: determining or generating a prediction result for a pixel to be predicted according to at least one first luminance value of at least one luminance pixel.

2. The processing method according to claim 1, wherein the step S10 comprises at least one of:

   a first method: determining or generating the prediction result according to the at least one first luminance value, at least one luminance offset, and at least one chrominance offset;
   a second method: determining or generating the prediction result according to the at least one first luminance value and a gradient value of the at least one luminance pixel;
   a third method: determining or generating an intermediate prediction result for the pixel to be predicted according to at least one first luminance value, and determining or generating the prediction result according to the intermediate prediction result;
   a fourth method: determining or generating the prediction result according to the at least one first luminance value and positional information of the at least one luminance pixel; or
   a fifth method: determining or generating the prediction result according to the at least one first luminance value and a second luminance value of at least one down-sampled luminance pixel.

3. The processing method according to claim 2, wherein the intermediate prediction result comprises a first intermediate prediction result and/or a second intermediate prediction result; and/or,
the determining or generating the prediction result according to the intermediate prediction result comprises:
performing weighted processing on the first intermediate prediction result and the second intermediate prediction result to determine or generate the prediction result.

4. The processing method according to claim 3, wherein at least one of:

   the first intermediate prediction result is determined or generated according to the at least one first luminance value;
   the second intermediate prediction result is determined or generated according to a gradient value of the at least one luminance pixel; or
   weights for the weighted processing are determined or generated according to distortion levels corresponding to the first intermediate prediction result and the second intermediate prediction result.

5. The processing method according to any one of claims 2 to 4, wherein at least one of:

   the positional information is determined or generated according to at least one positional scaling information; or
   the down-sampled luminance pixel is obtained or generated by down-sampling a luminance pixel.

6. The processing method according to any one of claims 1 to 4, the method further comprises, before the step S10:

   acquiring or determining a first pixel flag according to a dimension of a luminance block where a luminance pixel is located;
   if the first pixel flag is a first value, the step S10 comprises: directly determining or generating the prediction result according to the luminance pixel; or
   if the first pixel flag is a second value, the step S10 comprises: performing down-sampling processing on the luminance pixel to obtain a down-sampled luminance pixel and determining or generating the prediction result according to a second luminance value of the down-sampled luminance pixel.

7. The processing method according to any one of claims 1 to 4, wherein a prediction mode used for performing the step S10 is determined according to values of a second pixel flag and a gradient flag.

**8.** The processing method according to any one of claims 1 to 4, wherein at least one of:

the at least one luminance pixel is a luminance pixel that has not undergone down-sampling processing during an image encoding or decoding process;
the pixel to be predicted is a chrominance pixel; or
the prediction result is a chrominance prediction result.

**9.** A processing device, comprising: a memory and a processor, wherein the memory has an image processing program stored therein which, when executed by the processor, causes the steps of the image processing method according to any one of claims 1 to 8 to be implemented.

**10.** A storage medium, having a computer program stored therein, wherein the computer program, when executed by a processor, causes the steps of the image processing method according to any one of claims 1 to 8 to be implemented.

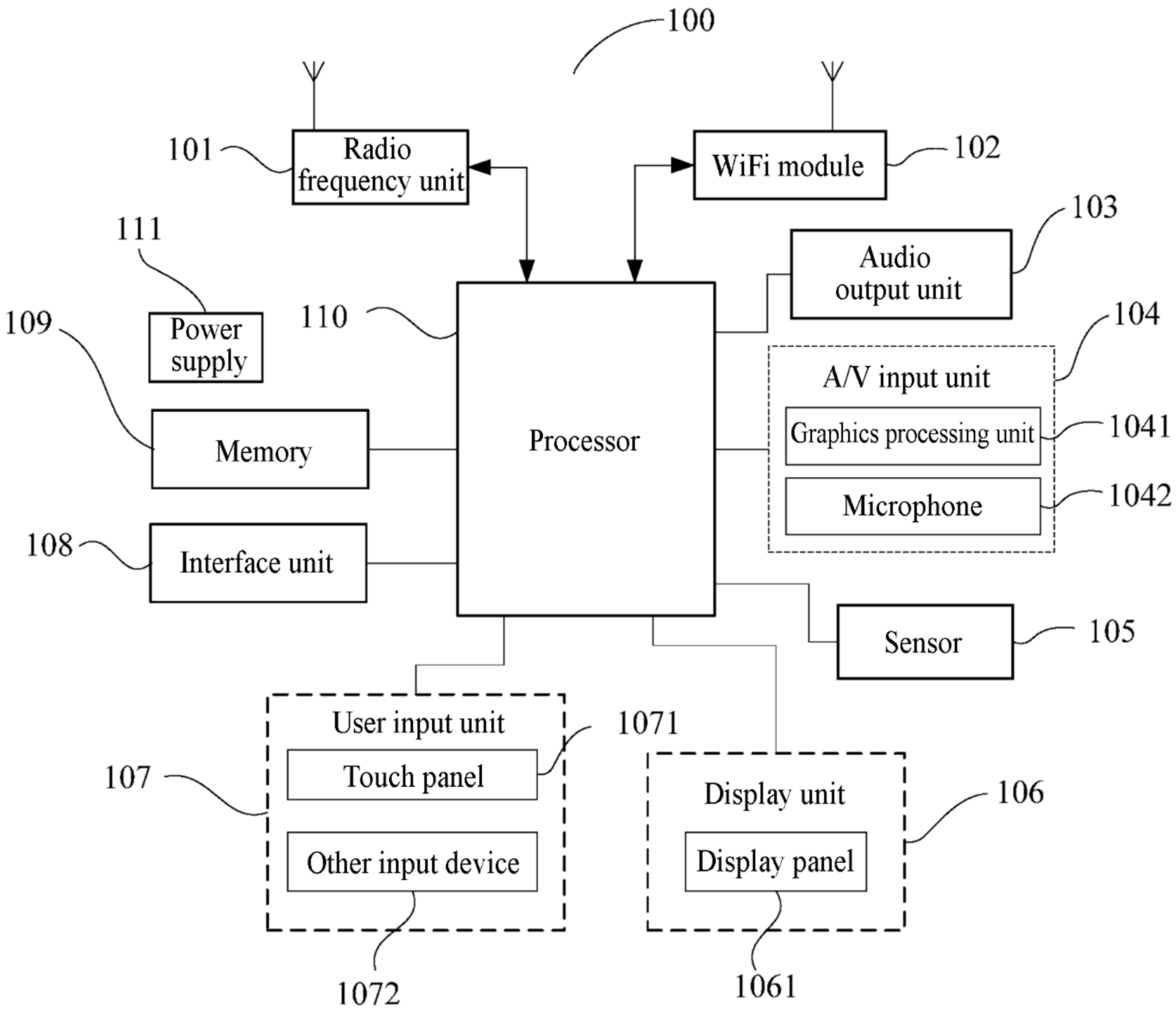
100
101
Radio frequency unit
WiFi module
102
103
Audio output unit
111
Power supply
110
109
104
A/V input unit
Graphics processing unit
1041
Memory
Processor
Microphone
1042
108
Interface unit
Sensor
105
User input unit
1071
Touch panel
107
Display unit
106
Other input device
Display panel
1072
1061

FIG. 1

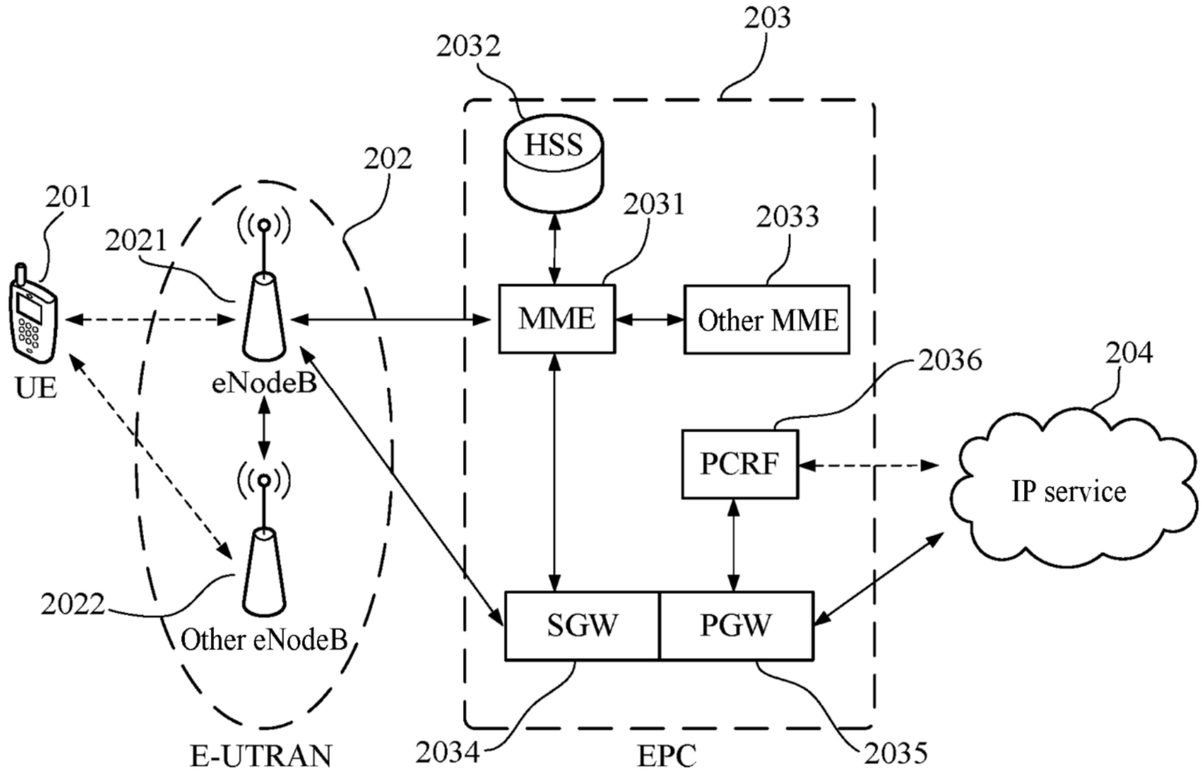


FIG. 2

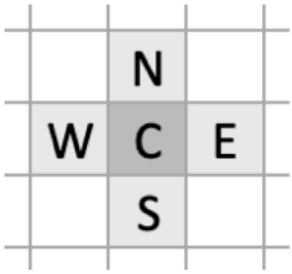


FIG. 3

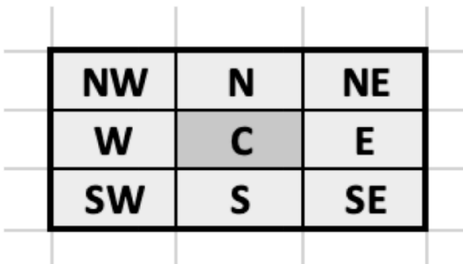


FIG. 4

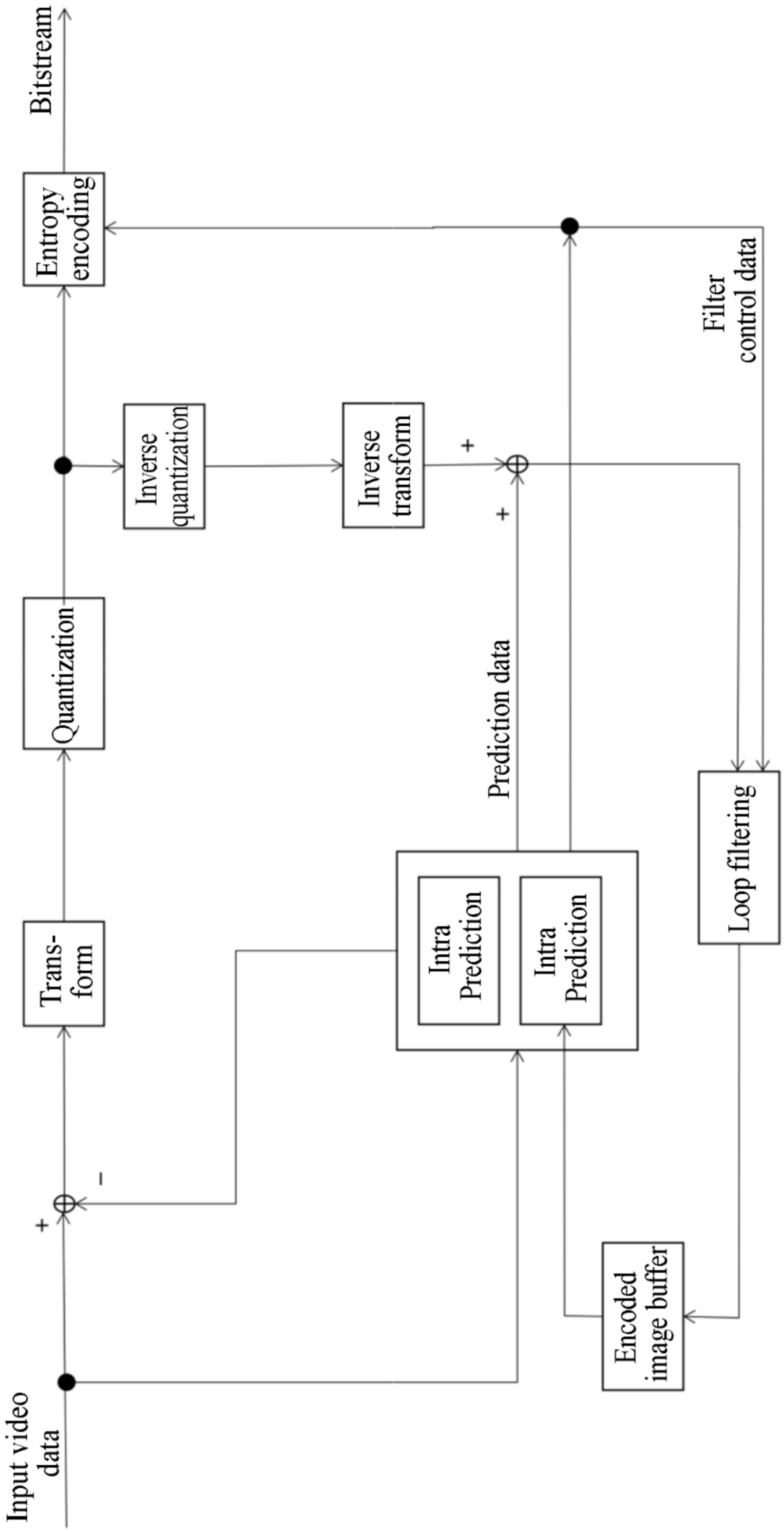
Bitstream
Entropy encoding
Quantization
Inverse quantization
Inverse transform
Trans- form
Filter control data
Prediction data
Intra Prediction
Intra Prediction
Loop filtering
Encoded image buffer
Input video data
+
-
+
+

FIG. 5A

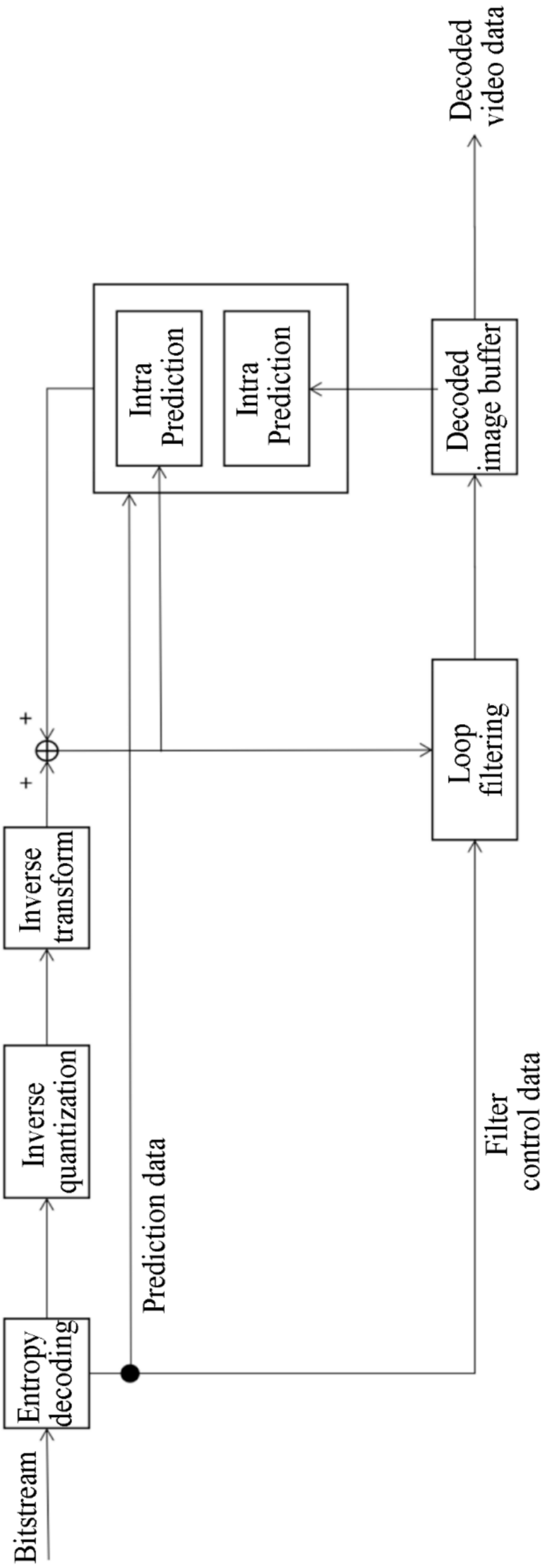
Bitstream
Entropy decoding
Inverse quantization
Inverse transform
+
+
Prediction data
Intra Prediction
Intra Prediction
Loop filtering
Decoded image buffer
Filter control data
Decoded video data

FIG. 5B

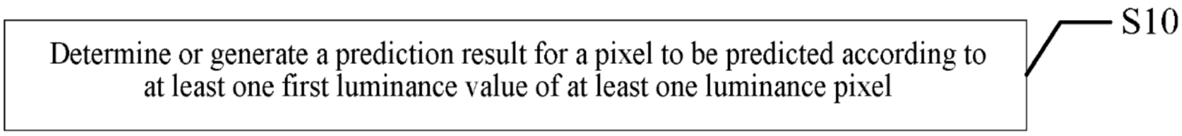
Determine or generate a prediction result for a pixel to be predicted according to at least one first luminance value of at least one luminance pixel
S10

FIG. 6

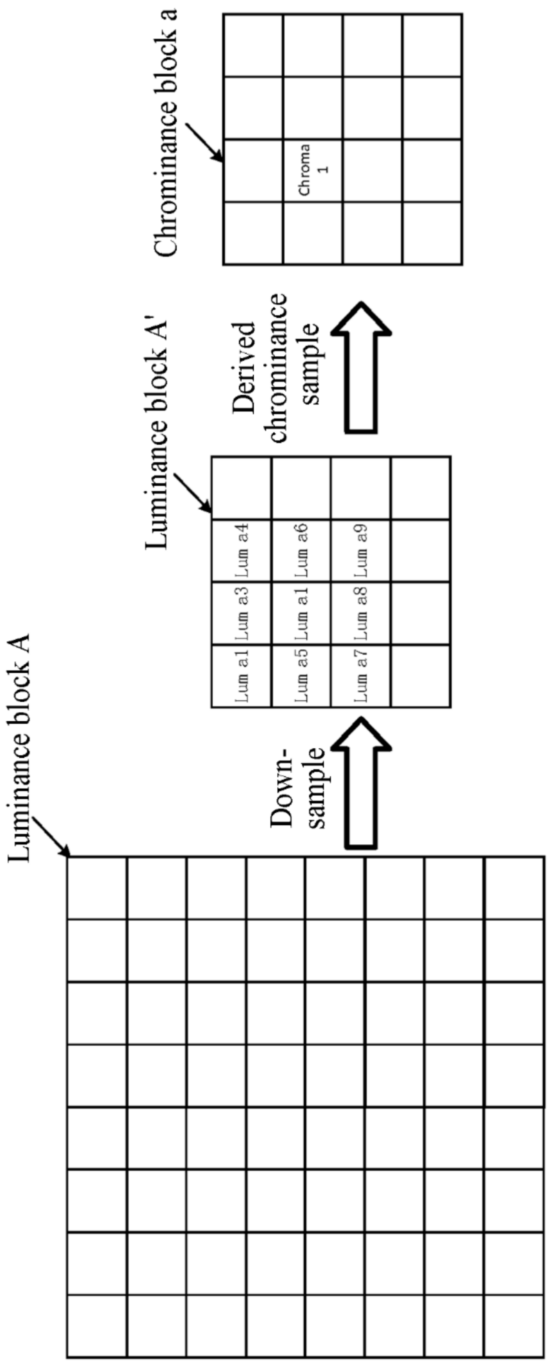
Chrominance block a
Chroma 1
Derived chrominance sample
Luminance block A'
Lum a1
Lum a3
Lum a4
Lum a5
Lum a1
Lum a6
Lum a7
Lum a8
Lum a9
Down-sample
Luminance block A

FIG. 7A

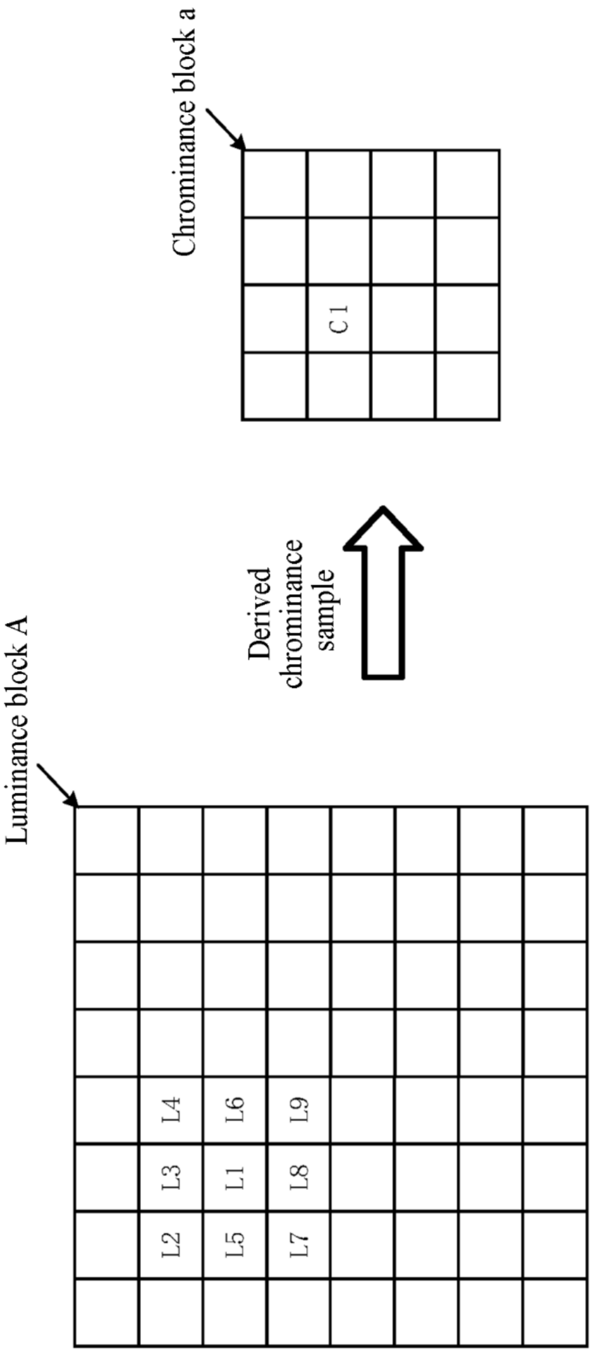
Chrominance block a
C1
Derived chrominance sample
Luminance block A
L4
L6
L9
L3
L1
L8
L2
L5
L7

FIG. 7B

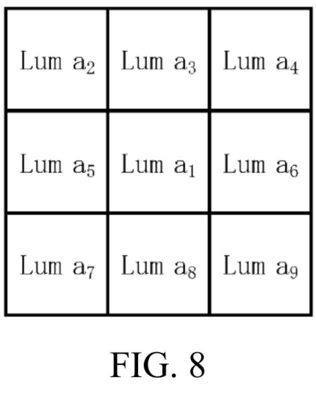
Lum $a_2$
Lum $a_3$
Lum $a_4$
Lum $a_5$
Lum $a_1$
Lum $a_6$
Lum $a_7$
Lum $a_8$
Lum $a_9$

FIG. 8

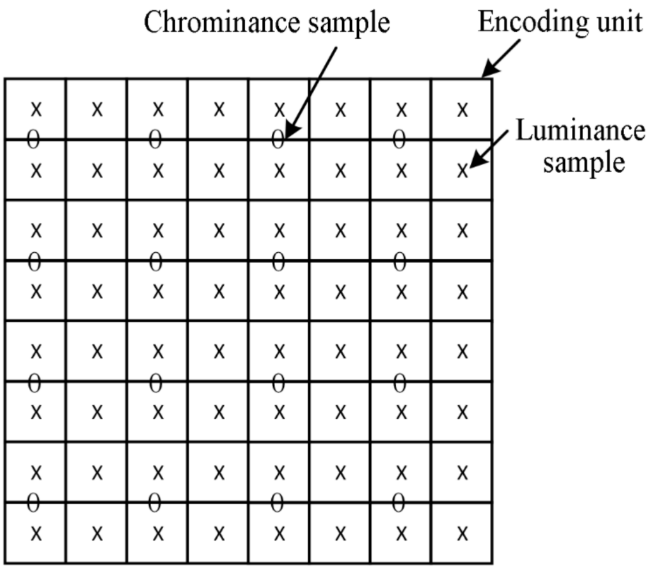


FIG. 9A

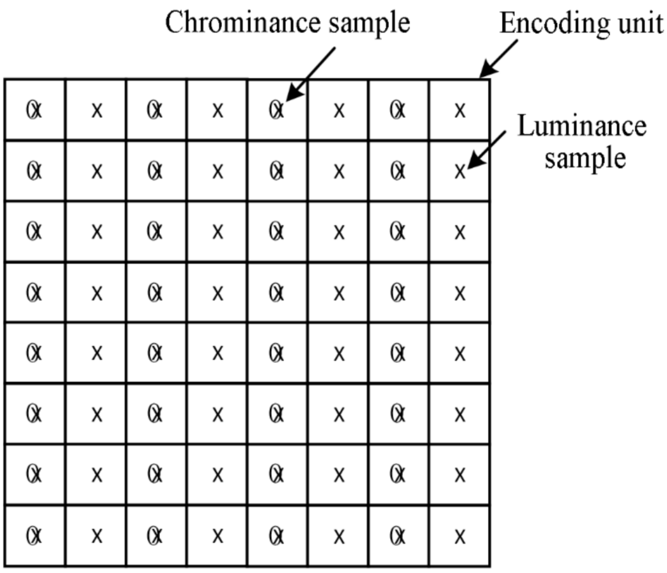


FIG. 9B

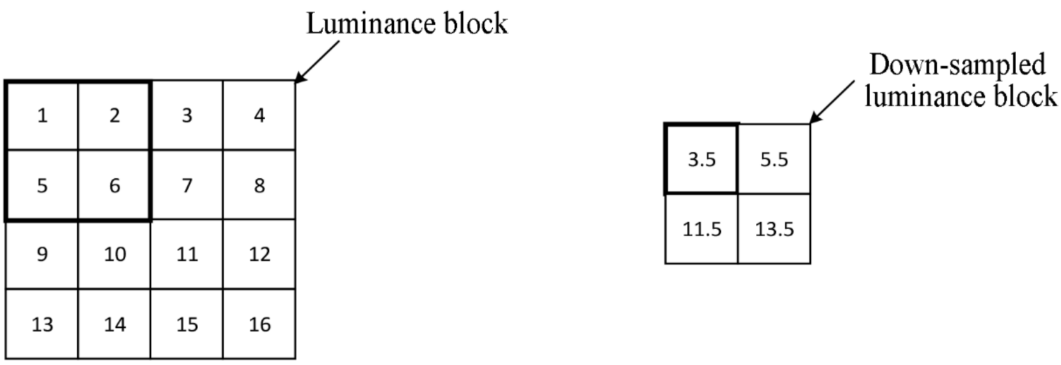


FIG. 10

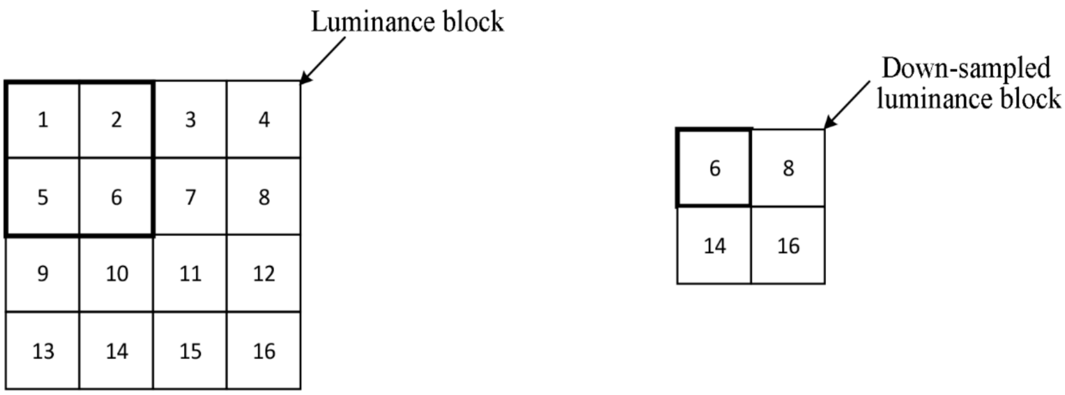
Luminance block
1
2
3
4
5
6
7
8
9
10
11
12
13
14
15
16
Down-sampled luminance block
6
8
14
16

FIG. 11

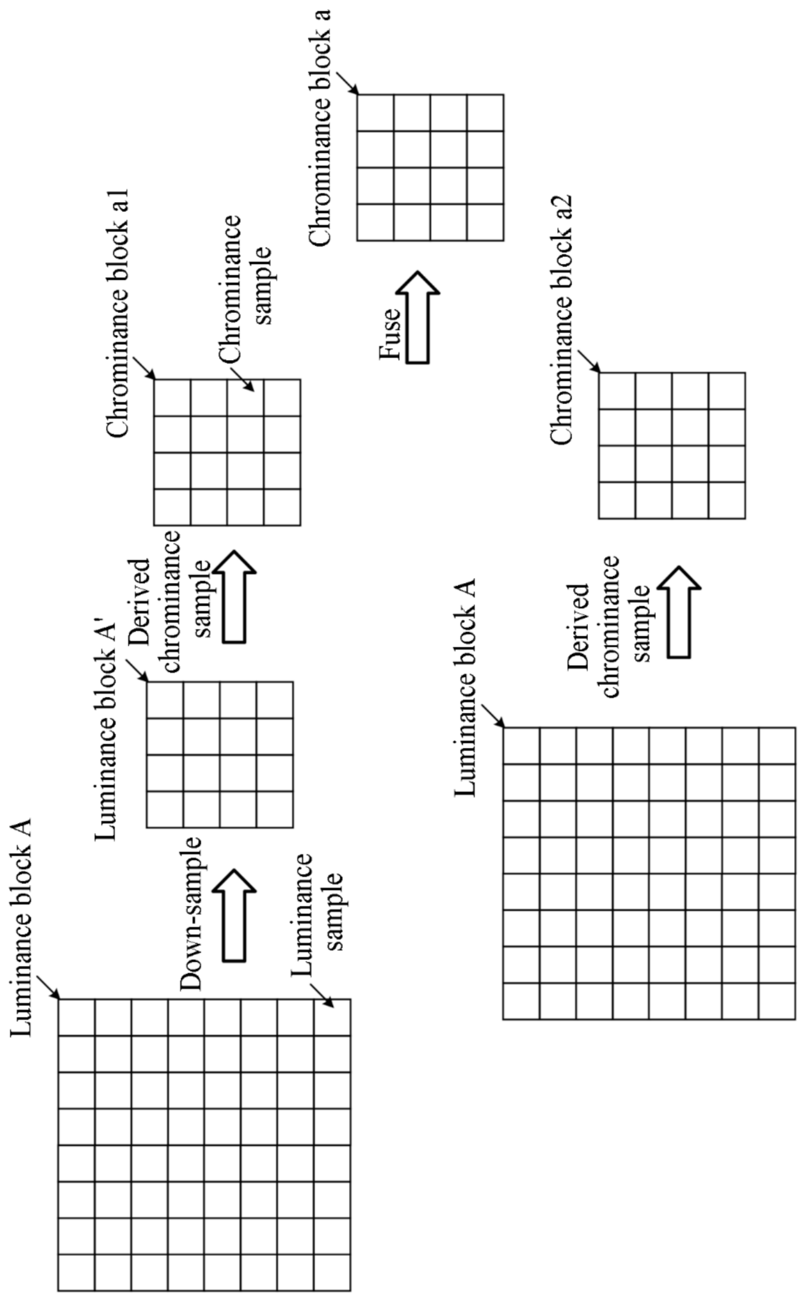
Chrominance block a
Fuse
Chrominance block a1
Chrominance sample
Chrominance block a2
Derived chrominance sample
Luminance block A'
Down-sample
Luminance sample
Luminance block A
Derived chrominance sample
Luminance block A

FIG. 12

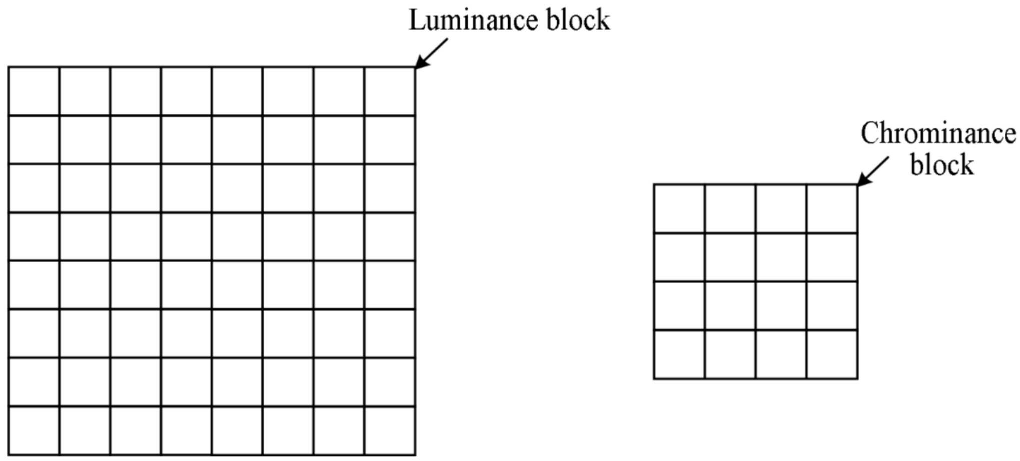


FIG. 13

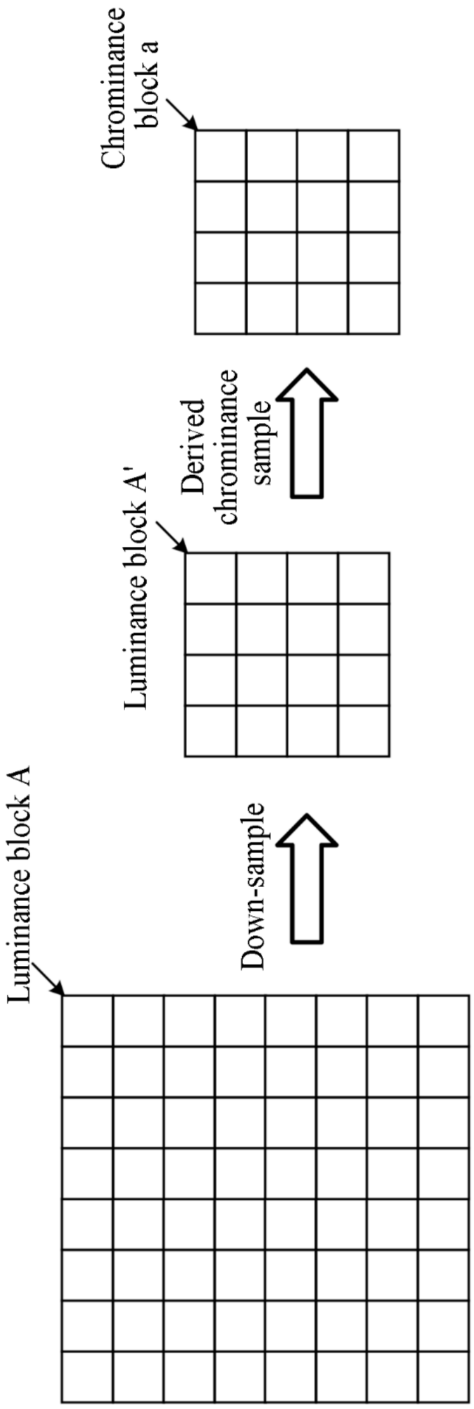
Chrominance block a
Derived chrominance sample
Luminance block A'
Down-sample
Luminance block A

FIG. 14

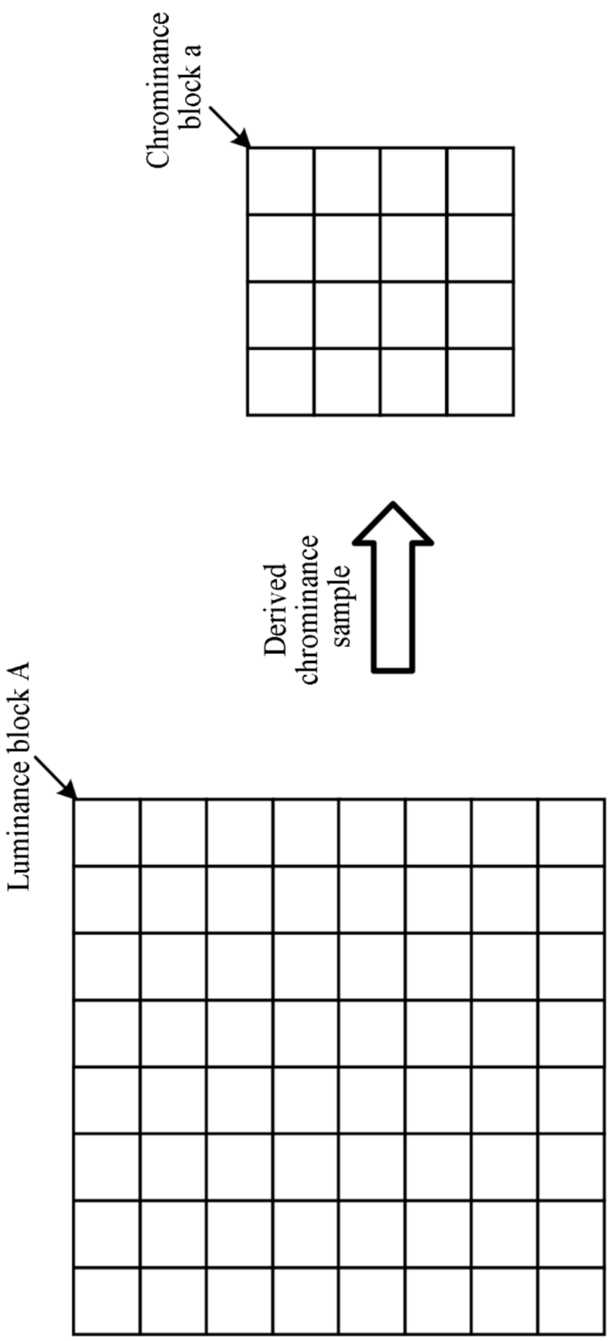
Chrominance block a
Derived chrominance sample
Luminance block A

FIG. 15

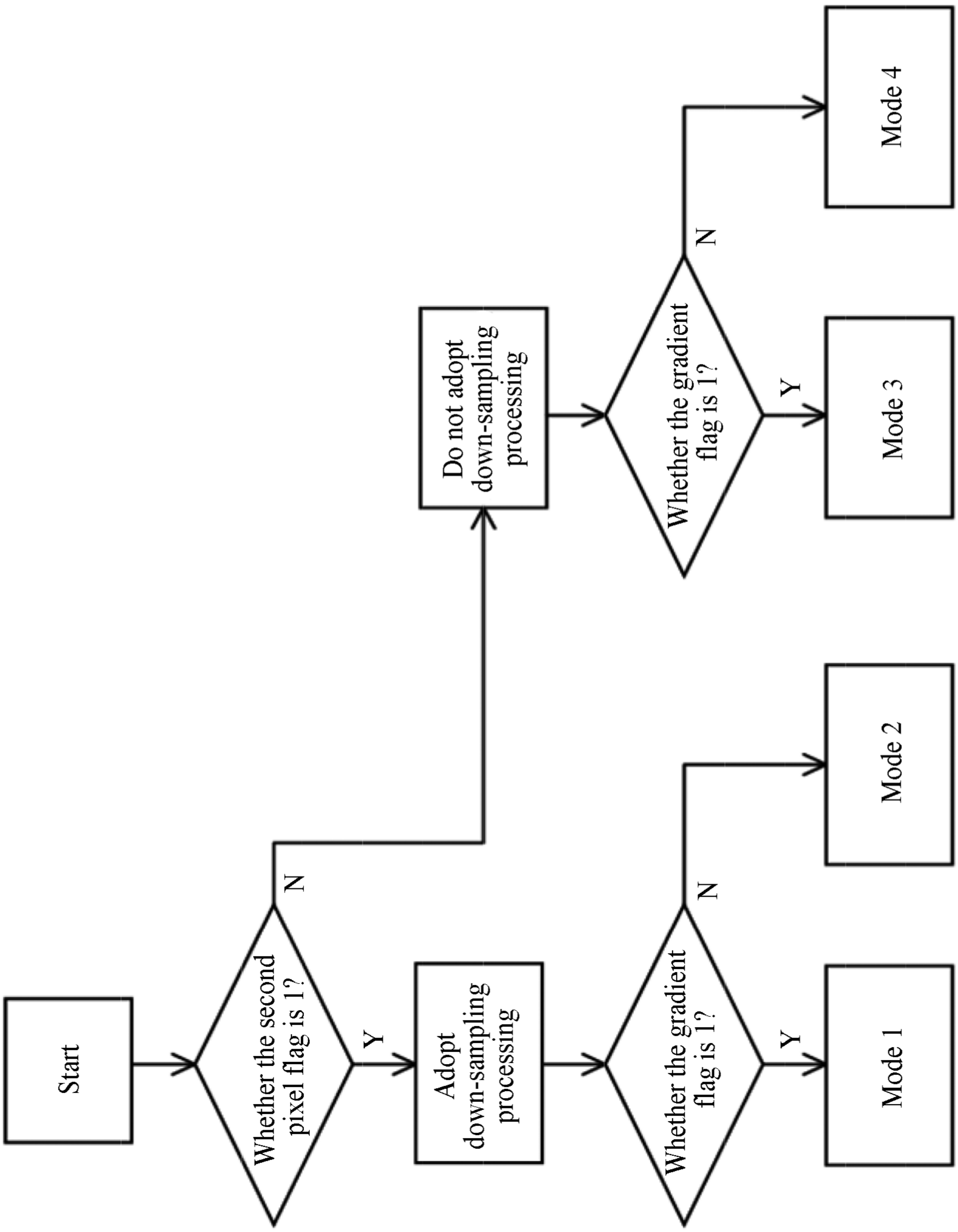
Start
Whether the second pixel flag is 1?
Y
N
Adopt down-sampling processing
Do not adopt down-sampling processing
Whether the gradient flag is 1?
Y
N
Whether the gradient flag is 1?
Y
N
Mode 1
Mode 2
Mode 3
Mode 4

FIG. 16

**INTERNATIONAL SEARCH REPORT**

International application No.
**PCT/CN2024/092912**

**A. CLASSIFICATION OF SUBJECT MATTER**

H04N19/186(2014.01)i; H04N19/182(2014.01)i; H04N19/593(2014.01)i; H04N9/64(2023.01)i

According to International Patent Classification (IPC) or to both national classification and IPC

**B. FIELDS SEARCHED**

Minimum documentation searched (classification system followed by classification symbols)

IPC: H04N19/-

Documentation searched other than minimum documentation to the extent that such documents are included in the fields searched

Electronic data base consulted during the international search (name of data base and, where practicable, search terms used)

CNTXT: ENTXTC; CNKI: 色度, 亮度, 预测, 不, 下采样, 过采样, 下取样, 过取样, 梯度, 偏移; VEN; ENTXT; IEEE: chroma, luminance, predict, no, not, down sample, over sample, gradient, offset

**C. DOCUMENTS CONSIDERED TO BE RELEVANT**

| Category* | Citation of document, with indication, where appropriate, of the relevant passages | Relevant to claim No. |
|---|---|---|
| PX | CN 116456102 A (SHENZHEN TRANSSION HOLDINGS CO., LTD.) 18 July 2023 (2023-07-18)<br>description, paragraphs 0067-0183 | 1-10 |
| X | CN 115988206 A (SHENZHEN TRANSSION HOLDINGS CO., LTD.) 18 April 2023 (2023-04-18)<br>description, paragraphs 0058-0136 and 0208-0214 | 1-10 |
| X | CN 109274969 A (HUAWEI TECHNOLOGIES CO., LTD.) 25 January 2019 (2019-01-25)<br>description, paragraphs 0079-0183 | 1-10 |
| X | US 2014355667 A1 (MEDIATEK SINGAPORE PTE. LTD.) 04 December 2014 (2014-12-04)<br>description, paragraphs 0016-0034 | 1-10 |
| A | CN 103650512 A (INTEL CORP.) 19 March 2014 (2014-03-19)<br>entire document | 1-10 |
| A | CN 111801940 A (SK TELECOM CO., LTD.) 20 October 2020 (2020-10-20)<br>entire document | 1-10 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **19 June 2024** | **27 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2024/092912**

**C. DOCUMENTS CONSIDERED TO BE RELEVANT**

| Category* | Citation of document, with indication, where appropriate, of the relevant passages | Relevant to claim No. |
|---|---|---|
| A | US 2020296380 A1 (SHARP K.K.) 17 September 2020 (2020-09-17)<br>entire document | 1-10 |

Form PCT/ISA/210 (second sheet) (July 2022)

**INTERNATIONAL SEARCH REPORT**
**Information on patent family members**

International application No.
**PCT/CN2024/092912**

| Patent document cited in search report | Publication date (day/month/year) | Patent family member(s) | Publication date (day/month/year) |
|---|---|---|---|
| CN 116456102 A | 18 July 2023 | CN 116456102 B | 03 October 2023 |
| CN 115988206 A | 18 April 2023 | None | |
| CN 109274969 A | 25 January 2019 | TW 201909623 A | 01 March 2019 |
| | | JP 2022050585 A | 30 March 2022 |
| | | JP 7461974 B2 | 04 April 2024 |
| | | EP 4117286 A1 | 11 January 2023 |
| | | EP 3633995 A1 | 08 April 2020 |
| | | EP 3633995 A4 | 27 May 2020 |
| | | EP 3633995 B1 | 06 April 2022 |
| | | KR 20220011216 A | 27 January 2022 |
| | | JP 7011031 B2 | 26 January 2022 |
| | | KR 20200019201 A | 21 February 2020 |
| | | KR 102352085 B1 | 17 January 2022 |
| | | US 2020154118 A1 | 14 May 2020 |
| | | US 11082709 B2 | 03 August 2021 |
| | | US 2021297682 A1 | 23 September 2021 |
| | | WO 2019015389 A1 | 24 January 2019 |
| | | TW 663880 B1 | 21 June 2019 |
| | | JP 2020526994 W | 31 August 2020 |
| | | CN 109274969 B | 22 December 2020 |
| US 2014355667 A1 | 04 December 2014 | EP 2801197 A1 | 12 November 2014 |
| | | EP 2801197 A4 | 25 March 2015 |
| | | EP 2801197 B1 | 15 November 2017 |
| | | KR 20140110015 A | 16 September 2014 |
| | | KR 101708985 B1 | 21 February 2017 |
| | | AU 2012364505 A1 | 10 July 2014 |
| | | AU 2012364505 B2 | 29 October 2015 |
| | | US 9560359 B2 | 31 January 2017 |
| | | WO 2013102293 A1 | 11 July 2013 |
| | | WO 2013102418 A1 | 11 July 2013 |
| CN 103650512 A | 19 March 2014 | KR 20140029525 A | 10 March 2014 |
| | | KR 101588144 B1 | 22 January 2016 |
| | | EP 2732624 A1 | 21 May 2014 |
| | | EP 2732624 A4 | 15 July 2015 |
| | | JP 2014525176 A | 25 September 2014 |
| | | WO 2013006986 A1 | 17 January 2013 |
| | | TW 201316778 A | 16 April 2013 |
| | | TWI 600326 B | 21 September 2017 |
| | | US 2013136174 A1 | 30 May 2013 |
| | | US 8724711 B2 | 13 May 2014 |
| | | CN 103650512 B | 19 April 2017 |
| CN 111801940 A | 20 October 2020 | WO 2019135636 A1 | 11 July 2019 |
| | | KR 20190083956 A | 15 July 2019 |
| | | US 2021176478 A1 | 10 June 2021 |
| US 2020296380 A1 | 17 September 2020 | US 11051021 B2 | 29 June 2021 |
| | | JP 2021005741 A | 14 January 2021 |
| | | US 2021274187 A1 | 02 September 2021 |
| | | US 11463701 B2 | 04 October 2022 |
| | | WO 2019054300 A1 | 21 March 2019 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 202310730087